(19) Europäisches Patentamt
European Patent Office
Office européen des brevets

(11) **EP 1 749 558 A1**

(12) **EUROPEAN PATENT APPLICATION**
published in accordance with Art. 158(3) EPC

(43) Date of publication:
**07.02.2007 Bulletin 2007/06**

(51) Int Cl.:
***A63F 13/00*** (2006.01)    ***A63F 13/02*** (2006.01)
***A63F 13/10*** (2006.01)

(21) Application number: **05737148.6**

(22) Date of filing: **27.04.2005**

(86) International application number:
**PCT/JP2005/008008**

(87) International publication number:
**WO 2005/105238 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **02.05.2004 JP 2004163882**
**06.10.2004 JP 2004321281**

(71) Applicant: **SEGA CORPORATION**
**Ohta-ku,**
**Tokyo 144-0043 (JP)**

(72) Inventors:
• **UEMURA, Hiroshi**
 **Tokyo 1440043 (JP)**
• **SOUSUMI, Kanichi**
 **Tokyo 1440043 (JP)**

(74) Representative: **Smith, Peter James**
**Serjeants,**
**25 The Crescent,**
**King Street**
**Leicester LE1 6RX (GB)**

(54) **GAME SYSTEM**

(57)    The amusing game system makes the best use of the characteristics of the game cards. Base character data are read out to generate a base character image; when a first code is read out, a first part data corresponding to the first code is read from a data memory means, and a part of the base character data is changed by the first part data read out; when a second code is read in, one of a plurality of second base data, corresponding to the second code, and another part of the base character image is changed by the selected second part data; when a second code is read in again, one of a plurality of second part data other than the second part data selected by the second part changing means is selected and read out, and another part of the base character image is changed by the second part data. Based on thus changed character data, a character image is generated.

FIG. 1

(A)          (B)

**Description**

TECHNICAL FIELD

The present invention relates to a game system using a game card.

BACKGROUND ART

The game cards have been generally trump cards, but various game cards, such as trading cards, etc., are popular mainly to adults. Recently, game systems combining trading card and game apparatuses are used.

A game card for some game systems has patterns and ability data of characters printed geometrically readably on one side and stores characteristic expressing data expressing identification codes of the characters and characteristics of the characters in said one side (see, e.g., Patent Reference 1). External information reading means reads the characteristic expressing data in the game cards to be used in games played on the game apparatuses.

A game card for other game systems has printed information in a designed arrangement and printed game information incapable of being visually understood (see Patent Reference 2). The game information printed on the game card is read by a game apparatus to be inputted to the game apparatus.

Patent Reference 1: Specification of Japanese Patent Application Unexamined Publication No. 2001-334012
Patent Reference 2: Specification of Japanese Patent Application Unexamined Publication No. 2002-224443
Patent Reference 3: Specification of Japanese Patent Application Unexamined Publication No. 2003-117231
Patent Reference 4: Specification of Japanese Patent Application Unexamined Publication No. Hei11-76616/1999
Patent Reference 5: Specification of Japanese Patent Domestic Publication No. 1999-32200

DISCLOSURE OF THE INVENTION

PROBLEMS TO BE SOLVED BY THE INVENTION.

In the conventional game system using the game cards, game information is simply inputted by using the game cards. An amusing game system which sufficiently utilizes the characteristics of the game cards has been desired.

An object of the present invention is to provide an amusing game system which sufficiently utilizes the characteristics of the game cards.

MEANS FOR SOLVING THE PROBLEMS

The game system according to one aspect of the present invention comprises: a code reading means for reading in a code recorded in a card; a character generating means for generating a character, based on a combination of a plurality of codes read in by the reading means; and a character evaluating means for evaluating the generated character, the game system further comprising a memory means for storing at least base character data which are a base for the generated character, first part data for forming a part of the character, which corresponds to a first code, and a plurality of second part data for forming other parts of the character, which correspond to a second code, the character generating means including: a base character image generating means for reading out the base character data and generating a base character image; a first part changing means which, when the first code is read in, reads out the first part data corresponding to the first code from the memory means and changes a part of the base character data by the readout first part data; a second part changing means which, when the second code is read in, selects and reads out, out of said plurality of second part data, one second part data corresponding to the second code and changes another part of the base character image by the second part data; a third part changing means which, when the second code is read again, selects and reads out one second part data out of said plurality of second part data other than the second part data selected by the second part changing means, and changes another part of the base character image by the selected second part data; and a character image generating means for generating a character image, based on the character data changed by at least any one of the first part changing means, the second part changing means and the third part changing means.

The game system according to one aspect of the present invention comprises: an operating means operated by a game player; a display means for displaying a game image; a sound outputting means for outputting game sounds; an evaluation means for evaluating an operation input into the operation means; and a control means for controlling the game, the control means including: a first means for displaying an image indicating an operation of the operation means on the game image by the display means; a second means for outputting a game sound indicating the operation of the operation means by the sound outputting means concurrently with the display of the image; and a third means for outputting an auxiliary game sound assisting the indication of the operation of the operation means from the sound outputting means before a prescribed period of time prior to the display of the image, and the evaluation means evaluating the operation input into the operation means, based on a timing of the operation input into the operation means and a timing of generating the game sound by the second means.

The game system according to one aspect of the present invention comprises: a first operating means operated by a first game player; a second operating means operated by a second game player; a display means for displaying a game image; a sound outputting means for outputting a game sound; and an evaluation means for evaluating an operation input into the operation means, the control means including: at least one of a first means for outputting an image indicating an operation of the first operation means on the game image by the display means, and a second means for outputting a game sound indication the operation of the first operation means by the sound outputting means, the evaluation means evaluating the operation input into the first operation means, based on whether or not at least one of a timing of the operation input into the first operation means and a timing of the operation input into the second operation means agrees with an output timing of the first means or the second operation means.

In the above-described game system, it is possible that the first means or the second means of the control means operating the first, operation means prescribed times, and the evaluation means evaluating the operation input of the first operation means, based on whether or not operation times of the first operation means are said prescribed times, whether or not operation times of the second operation means are said prescribed times and whether or not a total value of the operation times of the first operation means and the operation times of the second operation means are said prescribed times.

The game system according to one aspect of the present invention comprises: a code reading means for reading in a code recorded in a card; a character generating means for generating a character, based on a combination of a plurality of codes read in by the reading means; and a game control means for controlling a game, the card having a visual mark in addition to the code, the game system further comprising a memory means for storing base character data which are a base for the generated character, part data forming a part of the character, corresponding to the code, and a mark provided on the card, the character generating means including: a specific mark indicating means for indicating a specific mark; a base character image generating means which reads out the base character data and generates a base character image; a part changing means which, when the code is read in, reads the part data corresponding to the code from the memory means and changes a part of the base character data by the read part data; a character image generating means for generating a character image, based on the character data changed by the part changing mean; and a specific mark counting means for counting the specific marks on the cards which have been read in to generate the character image, the mage control means controlling the game, based on a counted result of the specific mark counted by the specific mark counting means.

The game system according to one aspect of the present invention comprises: a game control means for controlling a competition game in which a first character and a second character compete in a three-dimensional virtual space; a display means for picturing the three-dimensional virtual space with a virtual camera and displaying the three-dimensional space on a two-dimensional display monitor; and a camera control means for controlling a position and a focus of the virtual camera, the camera control means including: a first means for setting the position and focus of the virtual camera so that the competitors, the first character and the second character, are contained in a two-dimensional display monitor; and a second means for changing the position and the focus of the virtual camera. based on a competition result of the competition game so that the winning first character or the winning second character is moved toward the middle of the two-dimensional display monitor.

In the above-described game system, it is possible that the camera control means includes, a third means for controlling the position and the focus of the virtual camera to produce the surroundings of the winning first character or the winning second character when the movement of the winning first character or the winning second character in the two-dimensional display monitor has reached a prescribed limit, based on a competition result of the competition game.

In the above-described game system, it is possible that the camera control means includes, a fourth means which, when a position of the first character or the second character in the two-dimensional display monitor does not change for a prescribed period of time, controls the position and the focus of the virtual camera so that the first character or the second character is moved in the direction opposite to the direction of movement of the character by the second means.

The game system according to one aspect of the present invention comprises: a code reading means for reading in a bar code recorded in a card; a character generating means for generating a character, based on a combination of a plurality bar codes read in by the reading means; and a character evaluating means for evaluating the generated character, the game system further comprising a memory means for storing at least base character data which are a base for the generated character, and part data for forming a part of the character, which corresponds to the bar code, the character generating means including: a base character image generating means for reading out the base character data and generating a base character image; a part changing means which, when the bar code is read in, reads out the part data corresponding to the bar code from the memory means and changes a part of the base character data by the read out part data; and a character image generating means for generating a character image, based on the character data changed by the part changing means.

EFFECT OF THE INVENTION

The game system according to the present invention comprises a code reading-in means which reads in the code recorded in a card; a character generating means which generates a character, based on a combination of a plurality of codes read in by the reading-in means; and a character evaluating means which evaluates the generated character. The game system comprises a memory means which stores at least base character data which are a base of a character to be generated, first part data forming a part of the character, corresponding to a first code, and a plurality of second part data for forming other parts of the character, corresponding to second codes. The character generating means includes a base character image generating means which reads out the base character data and generates a base character image, a first part changing means which, when the first code is read in, reads the first part data corresponding to the first code from the memory means and changes the part of the base character data by the first part data, a second part changing means which, when the second code is read in, selects and reads out one second part data out of said plurality of second part data, corresponding to the second code and changes another part of the base character image by the selected second part data, a third part changing means which, when a second code is read again, selects and reads out one of said plurality of second part data other than the second part data selected by the second part changing means and changes another part of the base character image by the selected second part data, a character image generating means which generates a character image, based on the character data changed by at least any one of the first part changing means, the second part changing means and the third part changing means. The present invention can provide an amusing game system which makes the best use of the characteristics of the game cards.

BRIEF DESCRIPTION OF THE DRAWINGS

FIG. 1 is views of the game apparatus used in the game system according to a first' embodiment of the present invention.

FIG. 2 is a plan view, a front view and a side view of the card reader body of the game apparatus used in the game system according to the first embodiment of the present invention.

FIG. 3 is a horizontal sectional view and a vertical sectional view of the card reader body of the game apparatus used in the game system according to the first embodiment of the present invention.

FIG. 4 is a view illustrating the game card being scanned by card reader of the game apparatus used in the game system according to the first embodiment of the present invention.

FIG. 5 is a block diagram of the information processing device included in the game apparatus used in the game system according to the first embodiment of the present invention.

FIG. 6 is views of the Hair & Makeup Card as one example of the game cards used in the game system according to the first embodiment of the present invention.

FIG. 7 is views of the Dress Up Card as one example of the game cards used in the game system according to the first embodiment of the present invention.

FIG. 8 is a view of the Footwear Card as one example of the game cards used in the game system according to the first embodiment of the present invention.

FIG. 9 is views of the Special Item Cards as an example of the game cards used in the game system according to the first embodiment of the present invention.

FIG. 10 is views of card tables of the game system according to the first embodiment of the present invention (Part 1).

FIG. 11 is a view of a card table of the game system according to the first embodiment of the present invention (Part 2).

FIG. 12 is views of Oshare Majo tables of the game system according to the first embodiment of the present invention.

FIG. 13 is views of the dance party sites in the game of the game system according to the first embodiment of the present invention.

FIG. 14 is views of one example of the game proceeding of the game system according to the first embodiment of the present invention (Part 1).

FIG. 15 is views of one example of the game proceeding of the game system according to the first embodiment of the present invention (Part 2).

FIG. 16 is a view of the game image of the dance battle of the game system according to the first embodiment of the present invention.

FIG. 17 is time charts of the input timing of the button in the dance battle of the game system according to the first

EP 1 749 558 A1

embodiment of the present invention.

FIG. 18 is views of the dressing processing of the game of the game system according to the first embodiment of the present invention.

FIG. 19 is a flow chart of the operation sequence of the character generating processing in the game of the game system according to the first embodiment of the present invention.

FIG. 20 is a view explaining the dress up power computing method in the game of the game system according to the first embodiment of the present invention.

FIG. 21 is a view of the Hair & Makeup Card as one example of the game card used in the game system according to a second embodiment of the present invention.

FIG. 22 is a view of the Dress Up Card as one example of the game cards used in the game system according to the second embodiment of the present invention.

FIG. 23 is a view of the Footwear Card as one example of the game cards used in the game system according to the second embodiment of the present invention.

FIG. 24 is views of the Special Item Cards as one example of the game cards used in the game system according to the second embodiment of the present invention.

FIG. 25 is views of the game images of the dressing game of the game system according to the second embodiment of the present invention.

FIG. 26 is a view of the game image of the dance battle of the game system according to the second embodiment of the present invention (Part 1).

FIG. 27 is views of the game images of the dance battle of the game system according to the second embodiment of the present invention (Part 2).

FIG. 28 is views explaining the button input judgment of the game system according to the second embodiment of the present invention.

FIG. 29 is a flow chart of the button input judgment of the game system according to the second embodiment of the present invention (Part 1).

FIG. 30 is a flow chart of the button input judgment of the game system according to the second embodiment of the present invention (Part 2).

FIG. 31 is a view of the focus and the position of the virtual camera in the game of the game system according to the second embodiment of the present invention.

FIG. 32 is a flow chart of the summarized camera action in the game of the game system according to the second embodiment of the present invention.

FIG. 33 is a flow chart of the tug-of-war camera action in the game of the game system according to the second embodiment of the present invention.

FIG. 34 is a flow chart of the tie processing in the game of the game system according to the second embodiment of the present invention.

FIG. 35 is a view explaining the bonus camera action in the game of the game system according to the second embodiment of the present invention.

FIG. 36 is a flow chart of the bonus camera action in the game of the game system according to the second embodiment of the present invention.

FIG. 37 is views explaining the one point camera action in the game of the game system according to the second embodiment of the present invention.

FIG. 38 is a flow chart of the one point camera action in the game of the game system according to the second embodiment of the present invention.

FIG. 39 is views explaining the chase camera action in the game of the game system according to the second embodiment of the present invention.

FIG. 40 is a flow chart of the chase camera action in the game of the game system according to the second embodiment of the present invention.

BEST MODE FOR CARRYING OUT THE INVENTION

[CONVENTIONAL GAME SYSTEM]

The applicant of the present application developed as a game system using game cards a game system ("The King of Beetles (MUSHI KING)") themed to beetle fights. In this game system, the game cards are read in the game apparatus to input data so as to play the game. On this game apparatus, the game is played by displaying images of beetles on the display monitor and moving the beetle images at all the angles by computer graphics.

The play contents of this game system are a card fighting game in which beetles are fought with each other. As the game cards are used insect cards indicating kinds of the beetles and skill cards indicating skills in the fight. Both an insect card and a skill card are inputted to the card reader of the game apparatus, and the fight is decided by "rock-paper-scissors" system. World-wide beetles pictured very realistically and skills used by them amuse the game players.

Such a card fighting game in which beetles are fought with each other is favored by boys in terms of its theme and is not intended for girls. The development of such a game for girls has been desired. A theme favored by girls is dressing play, which interests girls without fail.

The applicant of the present application has developed a game system ("Let's Play with MacDonald Touch!") using a touch panel-type game apparatus. This game apparatus uses a touch panel-type monitor, on which various games can be played by a game player simply touching the touch panel with the fingers. One of the games of this game apparatus is a game ("Beautiful Princess") themed to the dressing play.

In this game, a girl on the display monitor is dressed as a game player likes and is danced in a dance party, and the game player enjoys the game by touching the monitor to change designs and colors of the girl. When the game player touches respective icons of hair styles, dresses, makeup, accessories arranged around the girl, images for preparing the respective items are presented, and the game player can change designs and colors. The dressing can be changed simply by touching the various icons displayed on the touch panel, which does not make the game amusing enough.

In view of the circumstances of this game, the inventors of the present application have developed an amusing game system which is themed to the dressing that interests girls, and utilizes the characteristics of game cards.

[A First Embodiment]

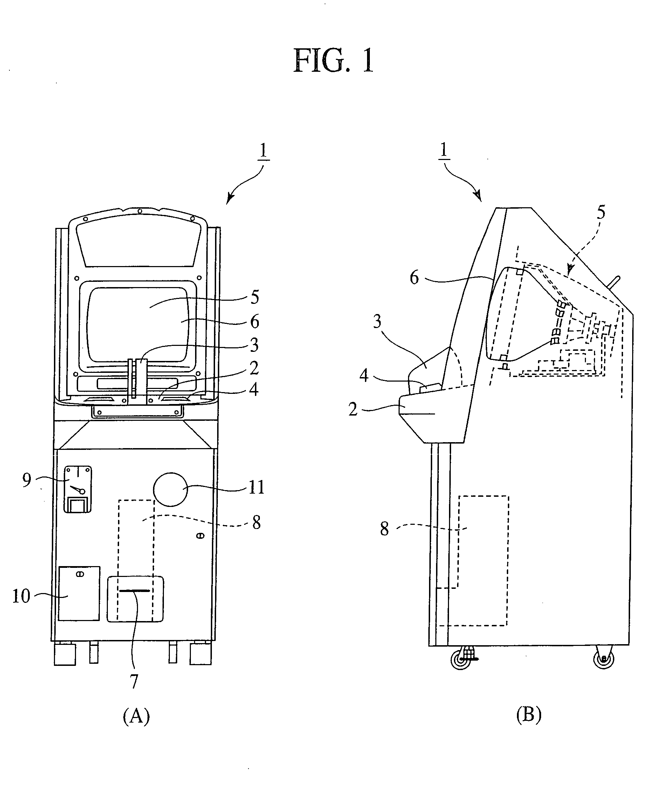

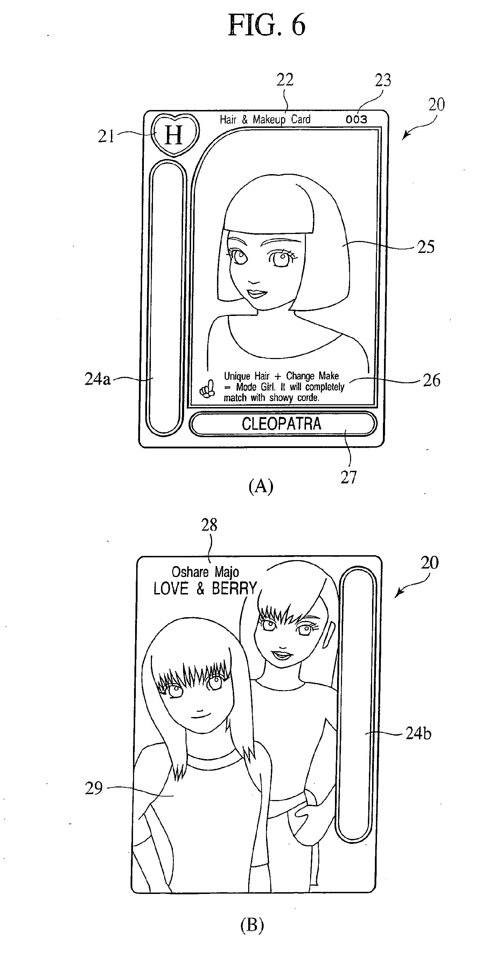

The game system according to a first embodiment of the present invention will be explained with reference to the drawings. In the game system according to the present embodiment, the game cards illustrated in FIGs. 6 to 9 are read in by the game apparatus illustrated in FIGs. 1 to 5.

(Game Apparatus)

The game apparatus used in the game system according to the present embodiment is illustrated in FIG. 1. FIG. 1(A) is a front view of the game apparatus, and FIG. 1(B) is a side view of the game apparatus.

The game apparatus 1 has a 130 cm-high vertically elongated chest-like body. An operation desk 2 projects forward from the game apparatus 1 at the middle thereof. A card reader 3 is mounted on the game apparatus 1 at the middle thereof and is capable of scanning the game cards length-wise. Input buttons 4 which are operated by pushing are respectively provided on the operation desks 2 on both sides of the card reader 3.

A display monitor 5 is mounted facing forward on the chest-like body of the game apparatus 1 above the operation desk 2. The front surface of the display monitor 5 is covered with a monitor cover 6.

A card exit 7 is provided in the game apparatus 1 below the operation desk 2. A game card is discharged from a card vendor 8 in the chest-like body of the game apparatus 1.

A coin selector 9 is provided in the game apparatus 1 below and left of the operation desk 2. A cash box 10 is provided below the coin selector 9 and left of the card exit 7.

A speaker 11 is provided in the game apparatus 1 below and right of the operation desk 2. Various effective sounds of the game are outputted from the speaker 11.

A game player inserts coins as the game money into the coin selector 9. When the coins are received, a fashion magic card which is a game card is discharged from the card vendor 8 into the card exit 7. The fashion magic card discharged is scanned by the card reader 3 of the game apparatus 1, and the game player can dress a witch character displayed on the display monitor 5.

(Card Reader)

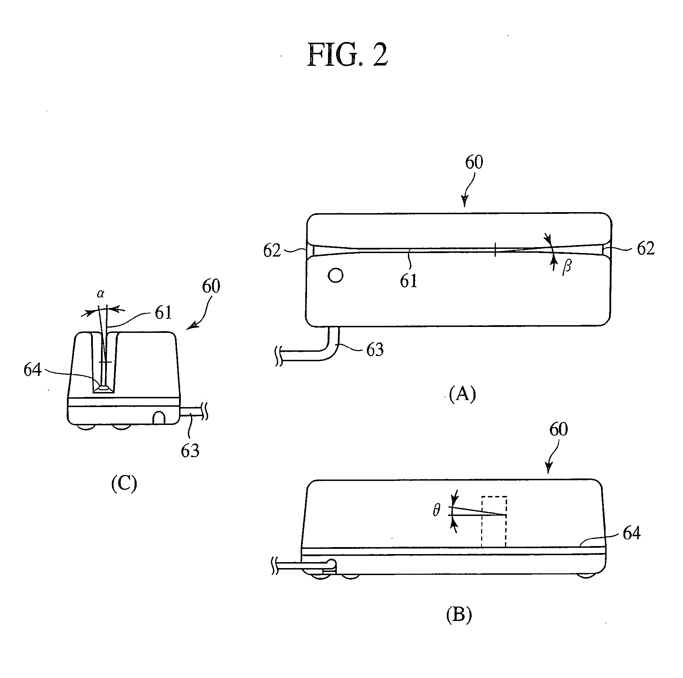

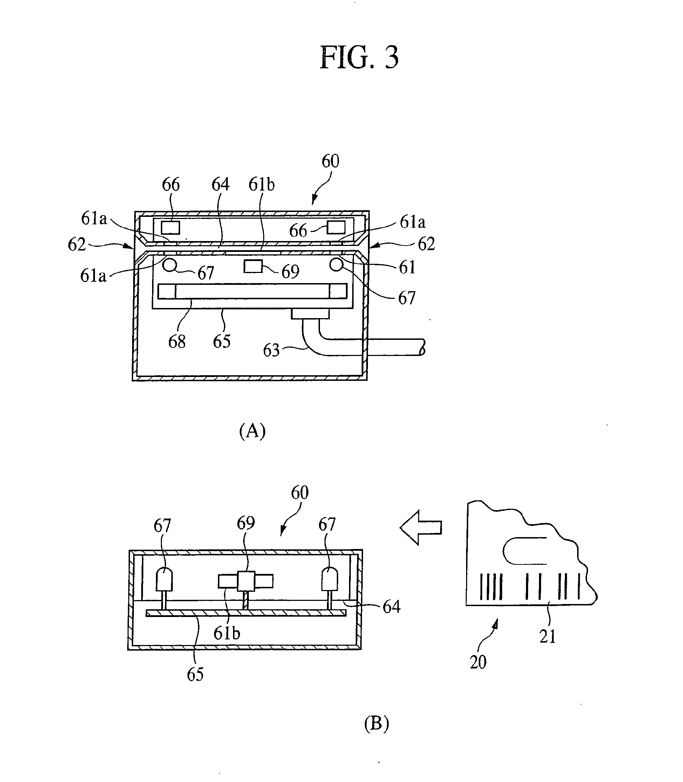

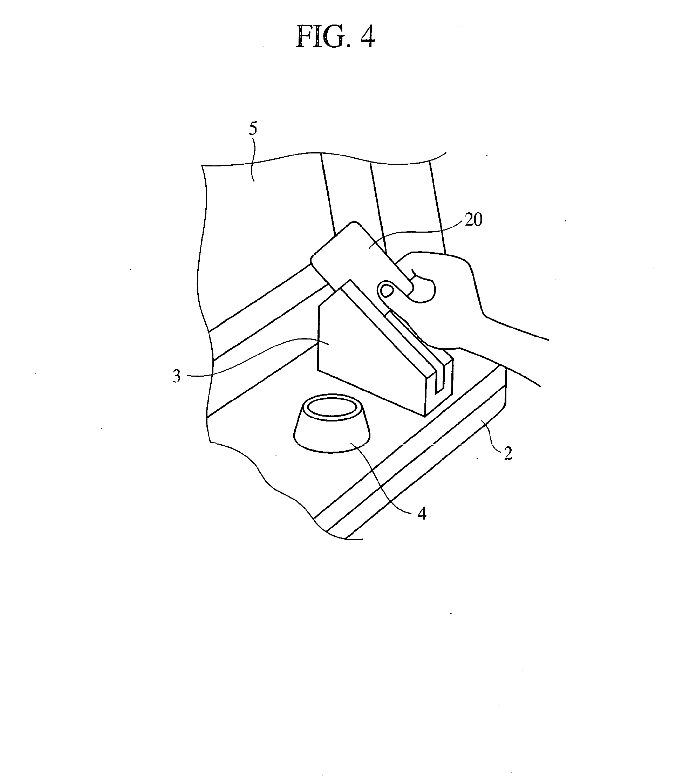

The card reader 3 of the game apparatus according to the present embodiment will be explained with reference to FIGs. 2 to 4. FIG. 2 (A) is a plan view of the card reader body 60 of the card reader 3. FIG. 2(B) is a front view of the card reader body 60. FIG. 2(C) is a side view of the card reader body 60. FIG. 3 (A) is a horizontal sectional view of the card reader body 60. FIG. 3(B) is a vertical sectional view of the card reader body 60. FIG. 4 is a view illustrating the scan of a game card by the card reader 3 of the game apparatus.

The card reader 60 has a card passage groove 61 for a game card to be passed through formed with a certain depth and through both ends. A cable 63 for sending signals to the outside is connected to the card reader body 60.

The card passage groove 61 of the card reader body 60 has a groove width increased towards both end surfaces 62 so as to facilitate the insertion of a game card at either of the end surfaces 62.

The bar code 21 of a game card 20 can be read by setting the game card 20 vertically in the card passage groove 62 with one side end thereof in contact with the bottom surface 64 of the card passage groove 61, and sliding the game card as is set. At this time, the game card must be scanned in the correct posture in which the game card 10 is in contact with the bottom surface 64 of the' card passage groove 61. However, the game card 20, which is slid with the hand of the game player, is not prevented from being a little tilted.

The card reader body 60 of the present embodiment is so adjusted that a game card 20 can be correctly read even when tilted at an angle of alpha ($\alpha$) (see FIG. 2(C)), at an angle of beta ($\beta$) (see FIG. 2(A)) or an angle of theta ($\theta$)) (see FIG. 2(B)).

As illustrated in FIG. 3(A), a circuit substrate 65 is disposed inside the card reader body 60. A set of a card detection photo-sensor 66 and a card detection light emitting diode 67 is disposed near each end surface 62 of the circuit substrate 65. Near the respective end surfaces of the card passage groove 61, small holes 61a are provided through the card passage groove 61. The card detection photo-sensor 66 and the card detection LED 67 of each set are opposed to each other through the small holes 61a associated with the set, so that the insertion of a game card 20 at either of the two ends 62 is detected.

An opening 61b is formed in one wall of the card passage groove 61 at the middle thereof. A light emitting lamp 68 and a reading photo-sensor 69 are disposed on the circuit substrate 65 beside of the card passage groove 61. While the card detection photo-sensor 66 is detecting the insertion of a game card 20, the light emitting lamp 68 applies light through the opening 61b to bar code fields 24a, 24b (see FIG. 6) of the game card 20, and the reading photo-sensor 69 reads the reflected light. The photo signals read by the reading photo-sensor 69 are analyzed by an analysis circuit (not illustrated) disposed on the circuit substrate 65 and converted to digital information as the read data of a bar code. The digital information is outputted to a control circuit on the game apparatus 1 via the cable 63 of the card reader body 60.

As illustrated in FIG. 4, a game player holds a game card 20 with the hand, and tilts the game card 20 towards one side and slides the game card 20 from the upper end of card reader 3 to the lower end, and the game card is scanned. At this time, the bar code fields 24a, 24b of the game card 20 must be below. The bar code fields 24a, 24b are provided on both sides of the game card 20, which permits the game card to be scanned on the front side or the underside. The game card 20 may be scanned oppositely from the lower end to the upper end.

In the present embodiment, two sets of the card detection photo sensor 66 and the card detection light emitting LED 67 for detecting the insertion of a game card 20 are provided, and the light emitting lamp 68 and the reading photo sensor 69 are operated while a game card 20 is being inserted. However, it is possible that the light emitting lamp 68 and the reading photo sensor 69 alone are provided, and the light, emitting lamp 68 stands by, incessantly emitting light to read the bar code fields 24a, 24b of a game card 20.

(Information Processing Device)

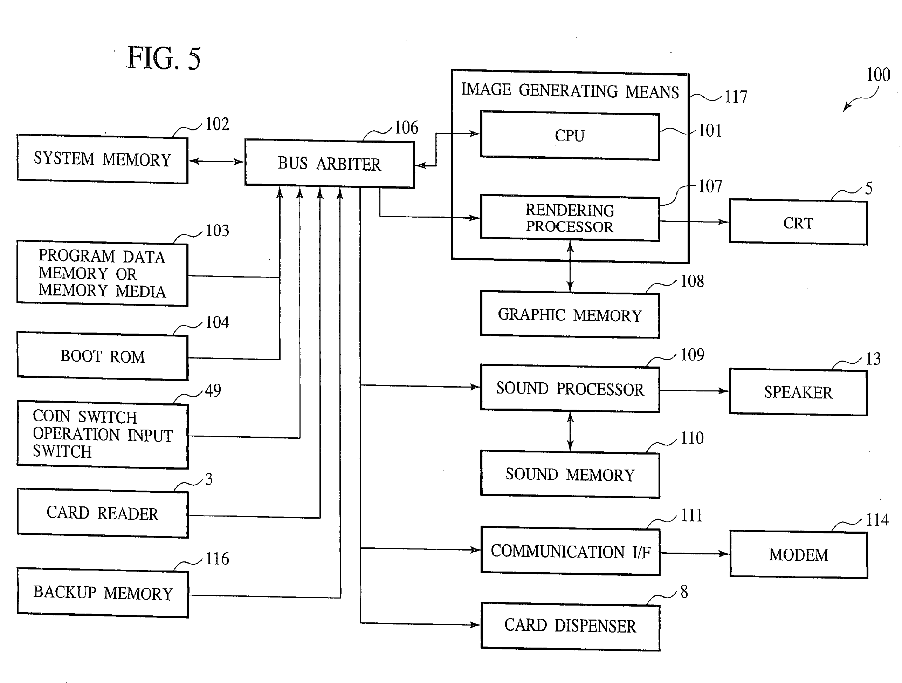

An information processing device (game board) provided in the game apparatus 1 of the present embodiment will be explained with reference to FIG. 5. FIG. 5 is a block diagram of the information processing device 100, which is the game board.

The information processing device 100 comprises a CPU 101 for generally controlling the system by executing a program, a BOOT ROM 104 for storing a program for actuating the information processing device 100, and a system memory 102 for storing a program for generating images to be executed by the CPU 101, other programs, etc. The information processing device 100 functions as game information processing devices of computers which execute general information processing programs, personal computers which can execute programs, such as card game, etc., game apparatuses, etc.

The programs and data executed by the CPU 101 include programs, data, etc. for controlling the game and programs and data for generating and controlling images to be displayed. In the present embodiment, the programs and data executed by the CPU 101 correspond to the base character data, part data of characters, character generating programs, etc.

To generate display images, polygon data (vertex data) including three-dimensional local coordinate data forming an object to be displayed, NURBS (Non Uniform Rational B-Spline) data (curved planes and control point data) are stored in the system memory 102, and, in the CPU or a geometry processor (not illustrated), the data are arranged in a world coordinate system in a three-dimensional simulated space to convert the local coordinates to the world coordinate system.

Furthermore, view point coordinates generated corresponding to operations of a game player or advance of the game are set in the world coordinate system, an object present in a view range as viewed from the view point in a prescribed view direction and at a prescribed image angle are converted to a view point coordinate system with the view point coordinates as the origin, and the coordinates of the object given by the conversion are supplied to a rendering processor 107.

The rendering processor 107 first makes interpolation processing, such as light source processing, etc., on the supplied coordinates of the object, and applies texture data stored in the graphic memory 108 to the object to thereby give details to the surface of the object. Furthermore, the rendering processor 107, for the display on the display monitor 5, projects the three-dimensional cubic object (polygons) on a two-dimensional plane (screen) to thereby convert the three-dimensional object to two-dimensional coordinate data (screen coordinate system), displays earlier those of the polygons whose Z coordinates are shallower, i.e., those of the polygons which are nearer the view point coordinates to thereby generate a two-dimensional image, and outputs the two-dimensional image to the display monitor 5, such as a CRT, liquid crystal display or others.

As described above, the CPU 101 and the rendering processor 107 are controlled by image producing programs and function as an image generating means 117.

The character evaluating means of the present embodiment is constituted by the CPU 101 and the system memory 102. The character generating means is constituted by the CPU 101, the system memory 102, the rendering processor 107 and a graphic memory 108.

The information processing device 100 includes input means, such as the card reader 3 which inputs the code recorded in a game card, the operation switch 4, the coin selector 9 which detects inserted coins, etc.

The information processing device 100 includes a backup memory 116 which stores result data of the interrupted game and reads out the result data to resume the game.

The information processing device 100 includes a sound processor 109 which generate sounds, and a sound memory 110 which stores data of generated sounds. The sound processor 109 generates digital signals of sounds, based on the data stored in the sound memory 110 and converts the digital signals to analog sound by a D/A converter (not illustrated) and outputs the analog sounds to the speaker 11 or a headphone (not illustrated).

The information processing device 100 includes a program data memory and memory medium 103. The game program and game data stored in these memory media 103 are read into the system memory 102, the graphic memory 108 and the sound memory 110.

The data stored in the memory media include programs and data for generating and controlling images to be displayed in addition to programs and data for controlling the game.

These storage media include media, such as CD-ROM and DVD-ROM, which are optically readable, and media, such as mask ROM and flash memory, which are electrically readable.

The information processing device 100 includes a communication interface 111 and a modem 114, and is connected to networks via LANs and the modem 114.

When coins equal to the game money are inserted in the coin selector 9, the information processing device 100 outputs to the card dispenser 8 a pay signal for paying a game card, and the card dispenser 8 pays 1 game card.

The above-described constituent members of the information processing device 100 are interconnected by signal lines such as buses, etc., and the output and input of the programs and data between the respective constituent members is controlled by a bus arbiter 106.

(Game Card)

Examples of the game cards used in the game system according to the present embodiment will be explained with reference to FIGs. 6 to 9.

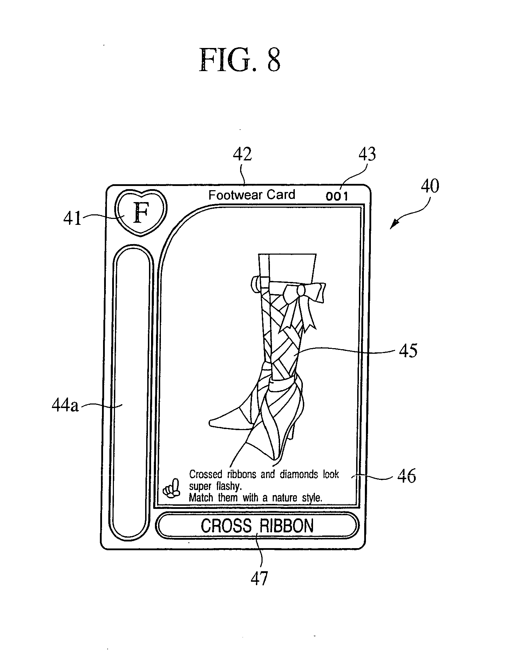

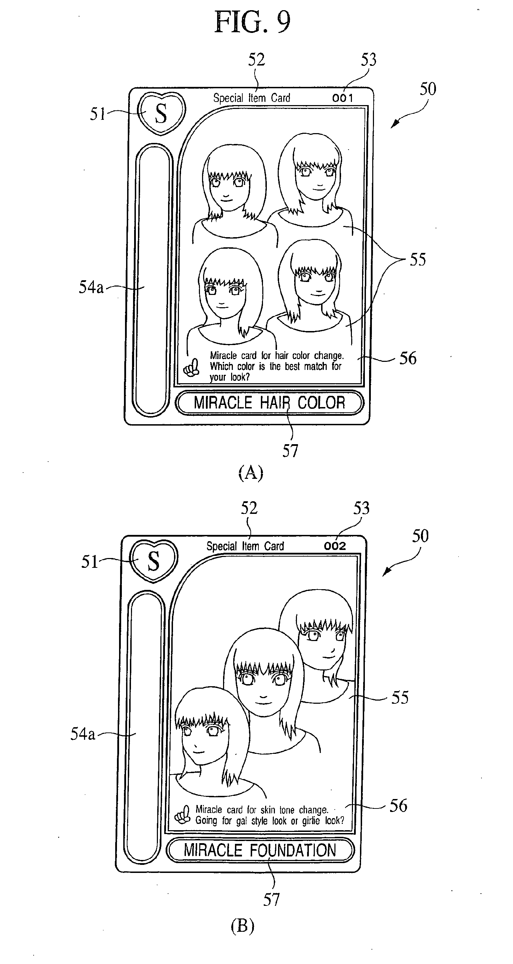

The game cards of the present embodiment are 88 mm-length and 63 mm-width thick paper cards of the so-called trump size. In the present embodiment, 4 kinds of game cards (fashion magic cards) are prepared: a Hair & Makeup Card for dressing the head (FIG. 6), a Dress Up Card for dressing the trunk (FIG. 7), a Footwear Card for dressing the feet (FIG. 8), and a Special Item Card for special dress up (FIG. 9).

(Hair & Makeup Card)

The Hair & Makeup Card will be explained with reference to FIG. 6. FIG. 6(A) illustrates the front side of the Hair & Makeup Card 20, and FIG. 6(B) illustrates the underside of the Hair & Makeup Card 20.

As illustrated in FIG. 6(A), the Hair & Makeup Card 20 has an attribute field 21 indicating the attribute at an upper left part. In FIG. 6(A), a designed letter "H" is drawn in the attribute field 21.

In the upper margin of the front surface of the Hair & Makeup Card 20, an attribute name indication field 22 indicating the attribute name of the card is provided. In FIG. 6(A), "Hair & Makeup Card" is indicated in the attribute field.

At a part of the front side of the Hair & Makeup Card 20, which is right of the attribute name indication field 22, an item number field indicating an item number of 3 digits is indicated. In FIG. 6(A), "003" is indicated in the item number field 23.

On the left margin of the front side of the Hair & Makeup Card 10, a bar code field 24a indicating a bar code for the game apparatus 1 to read the card is provided.

At the center of the front side of the Hair & Makeup Card 20, a portrait field 25 indicating a face corresponding to the item number of the card, and a comment field 26 indicating a comment are provided. In FIG. 6(A), a picture of "Cleopatra" is indicated in the portrait field 25, and a comment "Unique Hair + Orange Make = Mode Girl. It will completely match with showy corde" is indicated in the comment field 26.

In the lower margin of the Hair & Makeup Card 20, is a title field 27 where a title corresponding to the item number of the card is provided. In FIG. 6(A), "Cleopatra" is indicated in the title field 27.

As illustrated in FIG. 6(B), in the right margin of the underside of the Hair & Makeup Card 20, a bar code field 24b indicating the bar code for the game device 1 to read the card is provided. The bar code field 24b is identical with the bar code field 24a on the front side in the length, width and contents of the bar code.

At the upper part of the underside of the Hair & Makeup Card 10, a game title field 28 indicating a game title of the present game is provided. At the center of the underside of the Hair & Makeup Card 20, a portrait field 29 indicating a typical portrait of the present game is provided. In FIG. 6(B), "Oshare Majo Love and Berry" is indicated in the game title field, and a portrait associated with the game title is indicated in the portrait field 29.

On the underside of the game cards, a uniform picture is indicated for all different attributes, but different background colors are used for the different attributes. By seeing the backside of the game cards, a game play can easily recognize the attributes of the game cards but cannot identify the bar codes in the bar code fields 24b. Accordingly, a game player has the attribute of a game card known by a competitor by the underside but can use the game card without having the item known by the competitor.

(Dress Up Card)

The Dress Up Card will be explained with reference to FIG. 7. FIG. 7 illustrates the front side of the Dress Up Card 30.

As illustrated in FIG. 7, an attribute field 31 indicating the attribute of the Dress Up Card 30 is provided at an upper left part of the front side of the Dress Up Card 30. In FIG. 7, a design letter "D" is indicated in the heart in the attribute field 31.

In the upper margin of the front side of the Dress Up Card 30. an attribute name indication field 32 indicating the attribute name of the card is provided. In FIG. 7, "Dress Up Card" is indicated in the attribute name indication field 32.

In the part of the front side of the Dress Up Card 30, which is right of the attribute name indication field, an item number field indicating a 3-digit number is indicated. In FIG. 7, "001" is indicated in the item number field 33.

In the left margin of the front side of the Dress Up Card 30, a bar code field 34a indicating a bar code to be read by the game apparatus 1 is provided.

At the center of the front side of the Dress Up Card 30, a dress picture field 35 indicating a trunk corresponding to an item number of the card, and a comment field 36 indicating a comment are provided. In FIG. 7, a picture of "Cutie Sailor" is indicated in the dress picture field 35, and "Longing sailor blouse arranged cute. A little large ribbon on the chest is an attractive point" is indicated in the comment field 36.

In the lower margin of the front side of the Dress Up Card 30, a title field 37 indicating a title corresponding to the item number of the card is provided. In FIG. 7, "Cutie Sailor" is indicated in the title field 37.

The underside of the Dress Up Card 30 is the same as the underside of the Hair & Makeup Card 20 illustrated in FIG. 6(B) but is different in the background color.

(Footwear Card)

The footwear card will be explained with reference to FIG. 8. FIG. 8 illustrates the front side of the Footwear Card 40.

As illustrated in FIG. 8, an attribute field 41 indicating the attribute of the card is provided. In FIG. 8, the design letter "F" is indicated in the heart in the attribute field 41.

In the upper margin of the front side of the Footwear Card 40, an attribute name indication field 42 indicating the attribute name of the card is provided. In FIG. 8, "Footwear Card" is indicated in the attribute name indication field 42.

At a part of the front side of the Footwear Card 40, which is right of the attribute name indication field 42, an item number field 43 indicating an item number of '3 digits is provided. In FIG. 8, "001" is indicated in the item number field 43.

In the left margin of the front side of the Footwear Card 40, a bar code field 44a indicating a bar code to be read by the game apparatus 1 is provided.

At the center of the front side of the Footwear Card 40, a shoes picture field 45 indicting the foot corresponding to an item number of the card, and a comment field 46 indicating a comment are provided. In FIG. 8, a shoe picture of "Cross Ribbon" is indicated in the shoes picture field 45, and in the comment field 46, "Crossed ribbons and diamonds look super flashy. Match them with a nature style." is indicated.

In the lower margin of the front side of the Footwear Card 40, a title field 47 indicating a title corresponding to an item number of the card is provided. In FIG. 8, "Cross Ribbon" is indicated in the title field 47.

The underside of the Footwear Card 40 is the same as the underside of the Hair & Makeup Card 20 but is different in the background color.

(Special Item Card)

The Special Item Card will be explained with reference to FIG. 9. FIG. 9(A) illustrates the front side of the Special Item Card 50 for changing a hair color, and FIG. 9(B) illustrates the front side of the Special Item Card 50 for changing a skin color. The underside of the special card 50 is the same as the underside of the Hair & Makeup Card 20 illustrated in FIG. 6(B) but is different in the background color.

First, the Special Item Card 50 illustrated in FIG. 9(A) will be explained.

At an upper left part of the front side of the Special Item Card 50, an attribute field 51 indicating an attribute of the card is provided. In FIG. 9(A), the design letter "S" is indicated in the heart in the attribute field 51.

In the upper margin of the front side of the Special Item Card 50, an attribute name indication field 52 indicating the attribute name of the card is provided. In FIG. 9(A), "Special Item Card" is indicated in the attribute name field 52.

At a part of the front side of the Special Item Card 50, which is right of the attribute name indication field 52, an item number field 53 indicating an item number of 3 digits is provided. In FIG. 9(A), "001" is indicated in the item number field 53.

In the left margin of the front side of the Special Item Card 50, a bar code field 54a indicating a bar code to be read by the game apparatus 1 is provided.

At the center of the front side of the Special Item Card 50, a portrait field 55 indicating a portrait corresponding to an item number of the card, and a comment field 56 indicating a comment are provided. In FIG. 9(A), 4 portraits having different hair colors are indicated in the portrait field 55, and in the comment field 56, "Miracle card for hair color change. Which color is the best match for your look?" is indicated.

In the lower margin of the front side of the Special Item Card 50, a title field 57 indicating a title corresponding to an item number of the card is provided. In FIG. 9(A), "Miracle Hair Color" is indicated in the title field 57.

Next, the Special Item Card illustrated in FIG. 9(B) will be explained.

"Special Item Card" is indicated in an attribute name indication field 52 provided in the upper margin of the front side of the Special Item Card 50.

"002" is indicated in an item number field 53 provided on the front side of the Special Item Card 50 on the right side of the attribute name indication field 52.

In the left margin of the front side of the Special Item Card 50, a bar code field 54a indicating a bar code to be read by the game apparatus 1 is provided.

In a portrait field 55 provided at the center of the front side of the Special Item Card 50, 3 portraits having a sun-tanned face, a normal color face and a white face are indicated, and in a comment field 56, "Miracle card for skin tone change. Going for gal style look or girlie look?" is indicated.

In a title field 57 provided in the lower margin of the front side of the Special Item Card 50, "Miracle Foundation" is indicated.

When the Special Item Cards 50 illustrated in FIGs. 9(A) and 9(B) are read by the card reader 3 of the game apparatus 1, a hair color or a skin color is changed. That is, every time the Special Item Cards 50 are scanned by the card reader 3, a hair color or a skin color is changed to another, and after the Special Item Cards 50 are scanned a number of times corresponding to the number of all the colors, then the first color is displayed.

(Various Tables)

For the game apparatus 1 used in the game system according to the present embodiment, card tables for storing the original data of the various game cards, and Oshare Majo tables for storing data (of the head, trunk, foot, etc.) of the Oshare Majo (Love or Berry) to be displayed on the display monitor are prepared to execute the dressing game.

Four card tables are prepared for the four kinds (Hair & Makeup Card, Dress Up Card, Footwear Card and Special Item Card) of the game cards (fashion magic cards). The card tables are stored in the program data memory and memory media 103 of the information processing device 100 and are loaded in the system memory 102 when the game program is executed.

Two Oshare Majo tables are prepared corresponding to the characters to compete with. The Oshare Majo tables are stored in the system memory 102 of the information processing device 100.

(Card Tables)

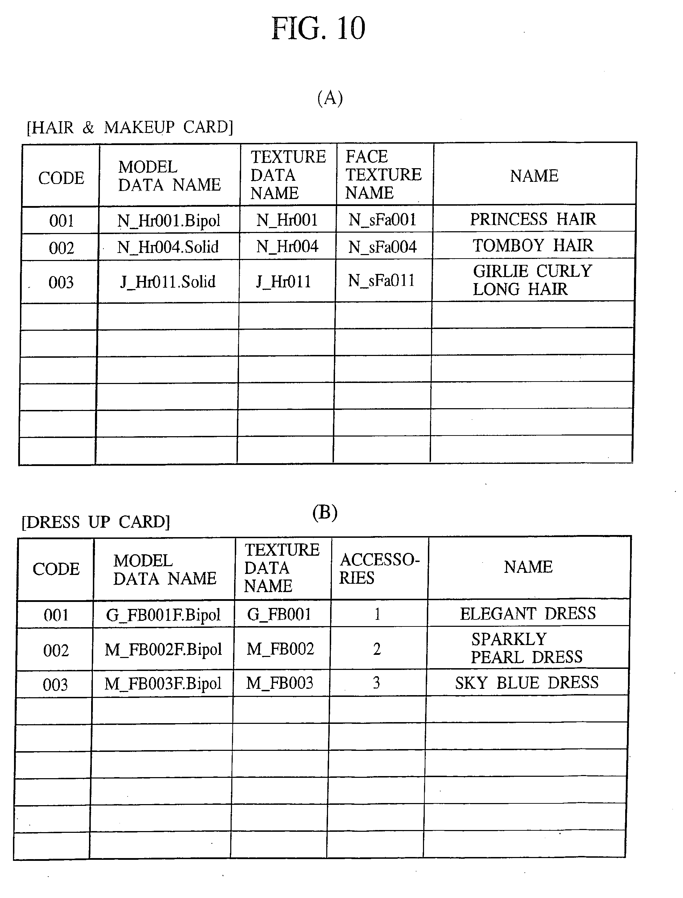

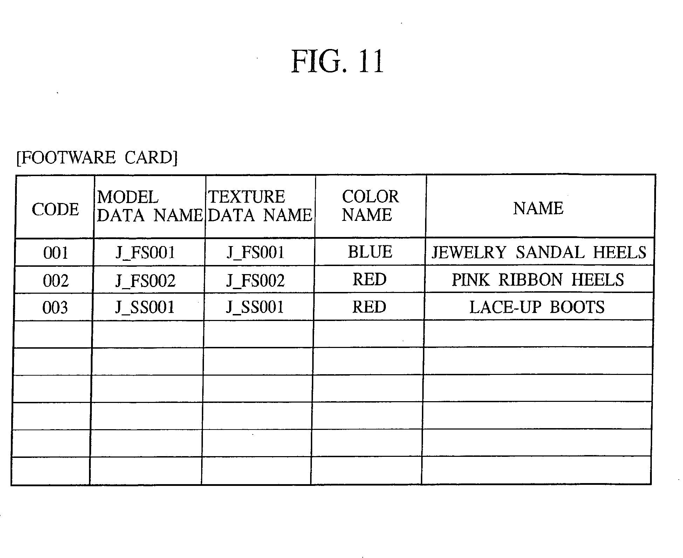

The card tables of the present embodiment will be explained with reference to FIGs. 10 and 11. FIG. 10(A) is the card table for the Hair & Makeup Card. FIG. 10(B) is the card table for the Dress Up Card. FIG. 11 is the card table for the Footwear Card. No card table is prepared for the Special Item Card.

As illustrated in FIG. 10(A), the card table for the Hair & Makeup Card includes a code field, a model data name field, texture data name field, a face texture data name field and a name field.

For example, for the Hair & Makeup Card of the code "001", "N-Hr001-Bipol" is indicated in the model data name field; "N-Hr001" is indicated in the texture data name field; "N-sFa001" is indicated in the texture data name field; and "Princess Hair" is indicated in the name field.

For the Hair & Makeup Card of the code "002", "N-Hr004-Solid " is indicated in the model data name field; "N-Hr004" is indicated in the texture data name field; "N-sFa004" is indicated in the face texture data name field; and "Tomboy Hair" is indicated in the name field.

For the Hair & Makeup Card of the code "003", "N-Hr011-Solid" is indicated in the model data name field; "N-Hr011" is indicated in the texture data name field; "N-sFa011" is indicated in the face texture data name field; and "Girlie curly long" is indicated in the name field.

As illustrated in FIG. 10(B), the card table for the Dress Up Card includes a code field, a model data name field, a texture data name field, accessory field and a name field.

For example, for the Dress Up Card of the code "001", "G-FB001F-Bipol" is indicated in the model data name field; "G-FB001" is indicated in the texture data name field; and "1" is indicated in the accessories field; and "Elegant dress" is indicated in the name field.

For the Dress Up Card of the code "002", "M- FB001F-Bipol" is indicated in the model name field; "G-FB001" is indicated in the texture data name field; "1" is indicated in the accessories field; and "Sparkly pearl dress" is indicated in the texture data name field.

For the Dress Up Card of the code "003", "M- FB003F-Bipol" is indicated in the model data name field; "M-FB003" is indicated in the texture data name field; "3" is indicated in the accessories field; and "Sky blue dress" is indicated in the name field.

As illustrated in FIG. 11, the card table for the Footwear Card includes a code field, a model data name field, a texture data name field, a color name field, a name field and a comment field.

For example, for the Footwear Card of the code "001", "J-FS001" is indicated in the model name field; "J-FS001" is indicated in the texture data name field; "Blue" is indicated in the color field; and "Jewelry heels" is indicated in the name field.

For the Footwear Card of the code "002", "J-FS002" is indicated in the model data name field; "J-FS002" is indicated in the texture data name field; "Red" is indicated in the color name field; and "Pink ribbon heels" is indicated in the name field.

For the Footwear Card of the code "003", "J-SS001" is indicated in the model data name field; "J-SS001" is indicated in the texture data name field; "Red" is indicated in the color name field; and "Lace-up boots" is indicated in the name field.

No card table is prepared for the Special Item Cards. The Special Item Cards are "Miracle hair color" and "Magical hair color" for the hair color, "Miracle foundation" for the makeup color, "Magical time plus" for the play time, etc.

(Oshare Majo Table)

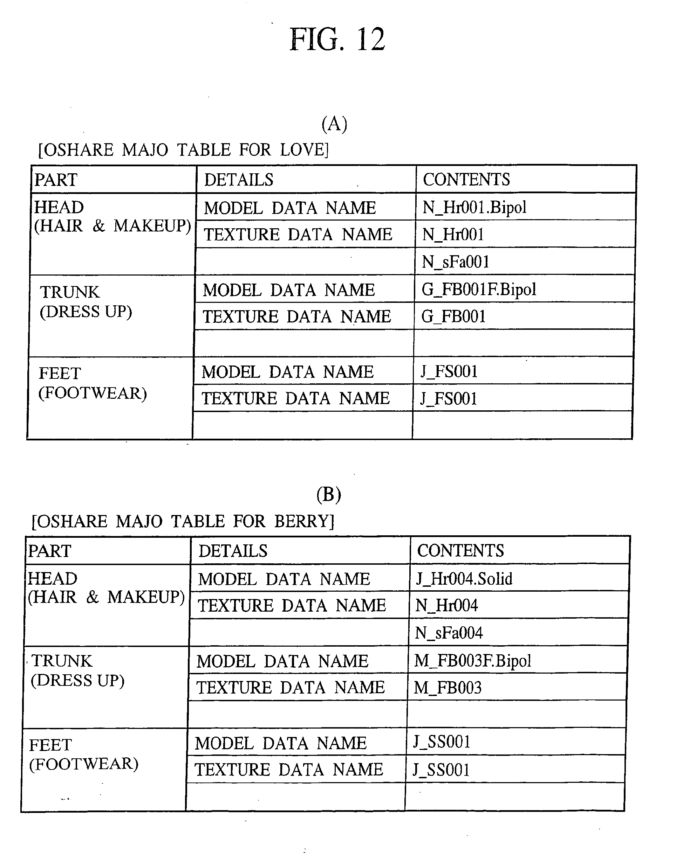

The Oshare Majo table of the present embodiment will be explained with reference to FIG. 12. FIG. 12 (A) is the Oshare Majo table for Love, and FIG. 12(B) is the Oshare Majo table for Berry.

As illustrated in FIG. 12(A), the Oshare Majo table for Love includes a part field and a details field and a contents field. The part includes the head (hair & makeup), the trunk (dress up) and foot (footwear), and each part includes a model data name field, a texture data name field, etc.

For example, in the Oshare Majo table for Love in FIG. 2(A), "N-Hr001-Bipol" is indicated in the model data name field of the head part (hair & makeup); "N- Hr001" "N-sFa001" are indicated in the texture data name field; "G-FB001F-Bipol" is indicated in the model data field of the trunk part (dress up); "G-FB001" is indicated in the texture data name field; "J-FS001" is indicated in the model name field; and "J-FS001" is indicated in the texture data name field.

The Oshare Majo table for Berry is the same as the Oshare Majo table for Love, and as illustrated in FIG. 12 (B), a part field, a details field and a contents field are provided. The part includes the head (hair & makeup), the trunk (dress up) and foot (footwear), and each part includes a model data name field, a texture data name field, etc.

For example, in the Oshare Majo table for Love in FIG. 2(B), "J-Hr004-Solid" is indicated in the model data name field of the head part (hair & makeup); "N- Hr004" "N-sFa004" are indicated in the texture data name field; "M-FB003F-Bipol" is indicated in the model data field of the trunk part (dress up); "M-FB003" is indicated in the texture data name field; "J-SS001" is indicated in the model name field; and "J-SS001" is indicated in the texture data name field.

(Dressing Processing based on the various Tables)

The dressing processing based on the above described various table will be explained.

First, the Dress Up Card (D) is read, and based on the code, the category and the item number are recognized.

Subsequently, the model data name, texture data name are referred to the card table of the Dress Up Card (D), and the model data and texture data are developed from the flash memory ROM into the system memory 102.

Then, the information is stored in the Oshare Majo table, and the model and texture to be displayed are transferred from the system memory 102 to the graphic memory 108 and are displayed on the display monitor 5.

Next, the Hair & Makeup Card (H) is read, and based on the code, the category and the item number are recognized.

Subsequently, the model data name and the texture name are referred to the card table of the Hair & Makeup Card (H), and the model data and texture data are developed from the flash ROM to the system memory 102.

Then, the information is stored in the Oshare Majo table, and the model and the texture to be displayed are transferred from the system memory 102 to the graphic memory 108 and are displayed on the display monitor 5.

Next, the Footwear Card (F) is read, and based on the code, the category and the item number are recognized.

Subsequently, the model data name and the texture data name are referred to the card table of the Footwear Card (F), and the model data and the texture data are developed from the flash ROM to the system memory 102.

Then, the information is stored in the Oshare Majo table, and the model and the texture to be displayed are transferred from the system memory 102 to the graphic memory 108 and are displayed on the display monitor 5.

Then, the Special Item Card (S) is read, and based on the code, the category name and the item number are recognized.

Subsequently, the category name is referred to the card table of the Special Item Card (S), and the necessary model data and texture data are developed from the flash ROM to the system memory 102.

Then, the information is stored in the Oshare Majo table, and the model and the texture to be displayed are transferred from the system memory 102 to the graphic memory 108 and are displayed on the display monitor 5.

(Summary of the Game)

The game will be summarized by means of the game system according to the present embodiment. The game of the present embodiment is the so-called dressing game using the game cards.

When a game player inserts coins into the game apparatus 1, one fashion magic card, which is the game card, is emitted, and the dressing game is started. The game player dresses the character by using the emitted game card and the game cards she has already owned so as to compete while enjoying various dressings.

In the game, two characters (Love and Berry), fashionable girl witches who are usually in good terms but are rivals in dressing up are staged. The game player applies cosmetics to and dresses either of the girls and competes in her dance.

One of the girls, Love, is a fourteen year-old witch who is a little shy but bright and lovely and is characterized as a girl who makes people feel like assisting her. Love is a cute girl who likes dressing up and becomes competitive in dressing up.

The other girl, Berry, is a fourteen year-old girl who is wise and cool and is characterized as a lady-like girl of a rich family. Berry is a girl of the lady-like type who also becomes competitive in dressing up and likes lady-like dressing.

In the game of the present embodiment, the fashion magic cards, which are the game cards, used to dress up the characters and making them dance well in various dance parties to thereby compete in making them outstanding from the other character.

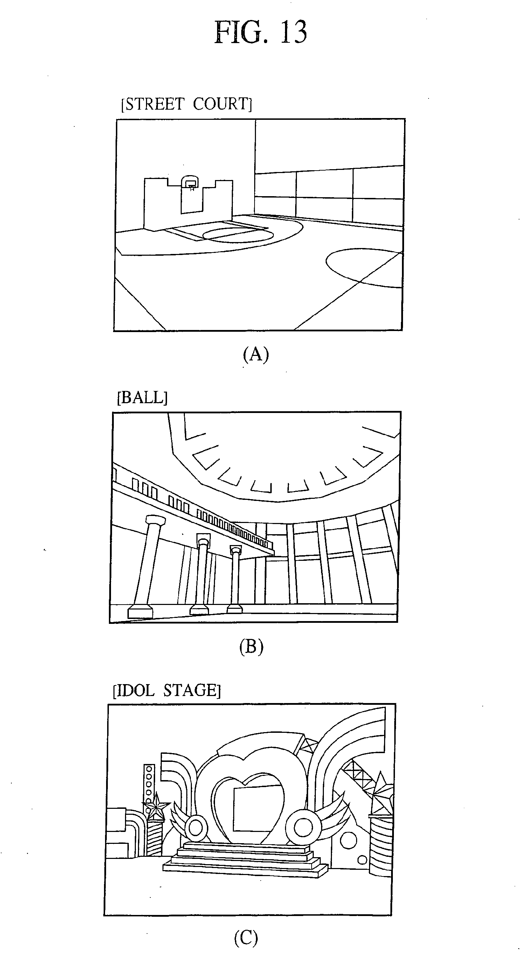

Sites of the dance parties are set at a street court, a ball and an idol stage. FIG. 13 illustrates examples of images displayed on the display monitor 5 of the game apparatus 1 in the step of the dance party. FIG. 10 (A) is the image of the street court where the characters dance, FIG. 10(B) is an image of the ball where the dance party is held; and FIG. 10 (C) is the image of the idol stage where the characters dance.

In the game of the present embodiment, based on the concept that the dressing must be suitable to the time, place and occasion (TPO), the dressing is different for the places where the characters dance.

For example, when the dance is performed on the street (FIG. 13(A)), the dance on the street is performed outdoors and in daytime, and is a hip-hop dance party. It is important that the dressing is casual and fashionable.

When the dance is performed in the dance hall (FIG. 13(B)), the dance party is performed in a castle at night, and it is important that the characters must wear formal dresses and dance a waltz with a nice gentleman.

When the dance is performed on the idol stage (FIG. 13(C)), the idol stage is an idol contest by a TV station. It is important that the characters present a furi furi dance in cute dresses on the indoor stage in the evening golden time.

(Example of the Game Progress)

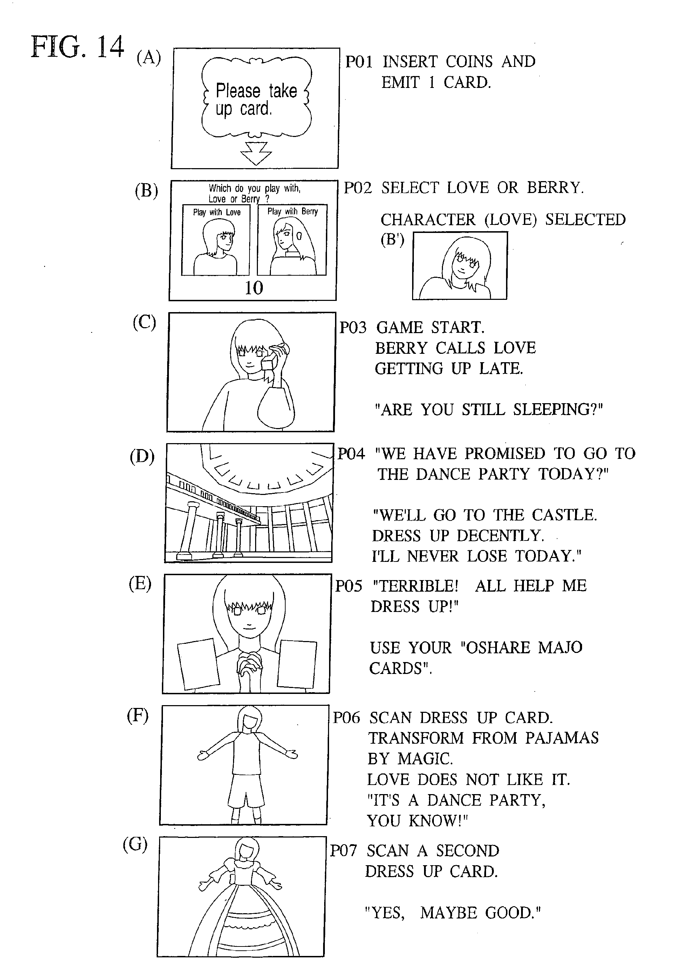

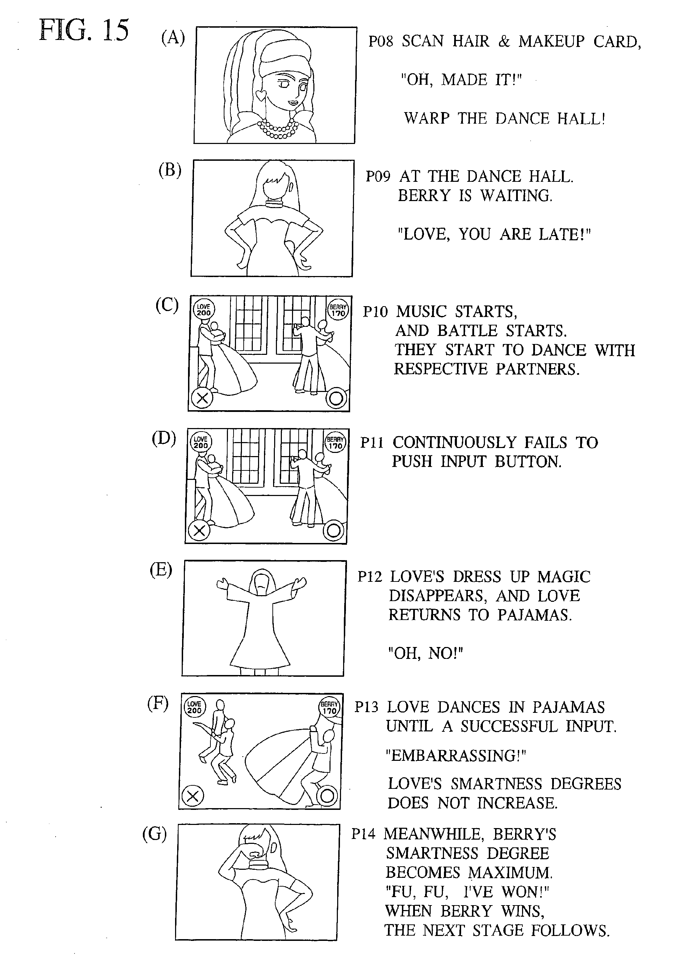

An example of the game progress will be explained with reference to FIGs. 14 and 15. FIGs. 14 and 15 illustrate the game images and dialogues sequentially displayed on the display monitor 5.

First, a game player inserts coins which is a game money in the game apparatus 1. The game image (FIG. 14 (A)) is displayed on the display monitor 5 of the game apparatus 1, and 1 fashion magic card is emitted from the game apparatus 1 (Step P01).

Next, the game image (FIG. 14(B)) is displayed on the display monitor 5 of the game apparatus 1, and the game player pushes the input button 4 on the side belonging to whichever of the two witches (Love and Berry) she likes to select (Step P02). When the game player chooses either of the witches, the game is started. In this case, Witch Love is selected, and the game image (FIG. 14(B')) in which the character of the selected Witch Love appears and greets.

Then, a game image (FIG. 14(C)) that Witch Berry calls Witch Love still sleeping is displayed. The dialogue of the Berry is "Are you still sleeping?" is displayed on the display monitor 5.

Next, a game image of the dance party (FIG. 14(D)) is displayed on the display monitor 5 of the game apparatus 1. The dialogues following the dialogue on the phone, "We have promised to go to dance the party today." "We will go to the castle dress up decently. I will never lose today." is displayed on the display monitor 5 (Step P04).

Next, a guide image (FIG. 14(E)) which guides the game player to insert the fashion magic card so as to help Witch Love dress up is displayed on the display monitor 5 of the game apparatus 1. The dialogue of Witch Love "Terrible! All help me dress up!" is displayed on the display monitor 5 (Step P05)

Then, the game player selects one (Dress Up Card) out of the fashion magic cards she owns, which will make up the dressing for the dance party and inputs the card in the card reader 3 of the game apparatus 1.

Here, when the fashion magic card which makes up the dressing unsuitable for the dance party is inputted, the dialogue "It's a dance party, you know!" and the game image (FIG. 14(F)) guiding another game card to be inputted are displayed (Step P06).

Then, the game player inserts the fashion magic card which makes the dressing suitable for the dance party, the game image (FIG. 14(G)) of dressed-up Witch Love is displayed together with the dialogue "Yes, Maybe good" on the display monitor 5 of the game apparatus 1 (Step P07).

Next, when the dressing up of Witch Love is decided, the fashion magic card of the next attribute (Hair & Makeup Card) is inputted in the card reader 3 of the game apparatus 1. Then, a game image (FIG. 15(A)) indicating that all have been prepared to go to the dance party is displayed on the display monitor 5 of the game apparatus 1 (Step P08).

Next, a game image which is warped in the dance hall (FIG. 15(B)) is displayed on the display monitor 5 of the game apparatus 1 (Step P09). The dialogue of Witch Berry "Love, you are late!" is displayed.

Next, the game image indicating the dress up power of Witch Love and Witch Berry in the dance hall is displayed on the display monitor 5 of the game apparatus 1 (Step P10).

Then, the dance battle starts in the dance hall. In the dance battle, the game player pushes the input button 4 well in time with a dance music outputted from the speaker 13 while watching the game image (FIG. 15(D)) displayed on the display monitor 5 of the game apparatus 1 (Step P11). When the input button 4 is pushed in good timing, the judged result displayed on the game image is indicated by O, and the judged result is indicated by X when the input button 4 is not pushed in good timing. Concurrently therewith, the cool points of a cool indicator is increased or decreased (Step P11).

When the game player operating Witch Love successively fails in the timing input with the input button 4 in the dance battle, Witch Love is dispelled from the magic, and the game image of Witch Love in the initial pajamas (FIG. 15 (E)) is displayed on the display monitor (Step P12).

Then, the indicator of the dance battle is not increased until the game player operating Witch Love inputs in good timing with the input button 4, and the game image that Witch Love dances in the pajamas in the dance party is displayed on the display monitor 5 of the game apparatus 1 (Step P13).

Then, if the indicator of the rival, Witch Berry becomes maximum meanwhile, the game is over, and the game image that Witch Love has lost is displayed on the display monitor 5 of the game apparatus 1 (Step P14). Witch Berry, who has won the dance battle, proceeds to the next stage.

(Dance Battle)

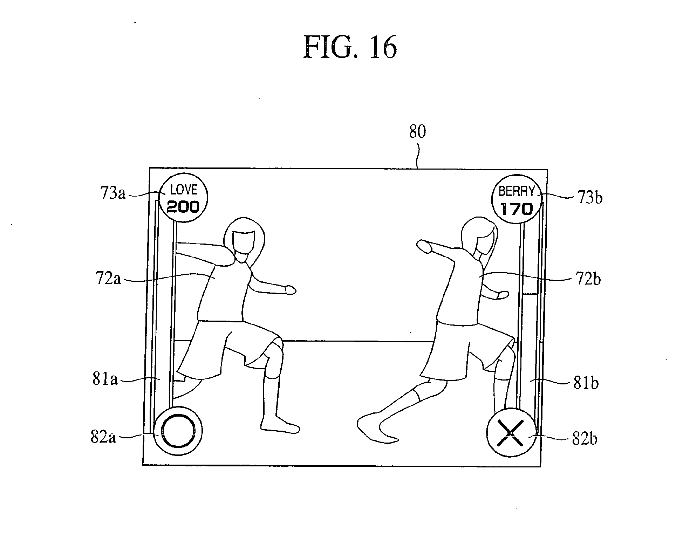

The dance battle of Step P11 of the game progress described above will be detailed with reference to FIG. 16. FIG. 16 is a game image of the dance battle.

In the dance battle, a game player pushes the input button 4 of the game apparatus in time with a dance music outputted from the speaker 13 while watching the game image (FIG. 16) displayed on the display monitor 5 of the game apparatus 1.

In the dance battle image 80 in FIG. 16, the street is the site of the dance battle, and the 2 witches (Love and Berry) perform the dance battle in dresses prepared by the fashion magic.

On the dance battle image 80, the respective characters 72a, 72b are displayed side by side, and the indicators 81a, 81b of the cool points of the respective characters are displayed length-wise. Dress up power values calculated based on various parameters which will be described later are displayed together with the witch names (Love and Berry) upper left and upper right on the image. The dress up power "200" is indicated for Witch Love, and the dress up power "170" is indicated for Witch Berry here.

For the dance battle image 80, the input button 4 is pushed in time with a dance music. A game player cheers Love or Berry to keep her dressed up. While Love or Berry are being kept dressed up, the "cool point" goes on increasing with time. The increase varies depending on the cool point and the correctness of the timing of pushing the input button 4.

When the input button 4 is not pushed in correct timing, i.e. at prescribed times or for a prescribed period of time, the dressed witch is returned to the pajamas. While the witch is wearing the pajamas, the cool point is not increased.

Input judgment fields 82a, 82b are provided respectively lower left and lower right on the dance battle image 80. When the input button 4 is pushed well in time with a dance music, the O mark is indicated in the input judgment field 82a, 82b; and the X mark is indicated in the input judgment parts 82a, 82b when the input button 4 is not pushed in time with the dance music. When the input button 4 is pushed well, the "cool point" in the indicator 81a, 81b is raised, but when the input button 4 is not pushed well, the "cool point" in the indicator 81a, 81b is not raised.

(Input Timing of the Input Button)

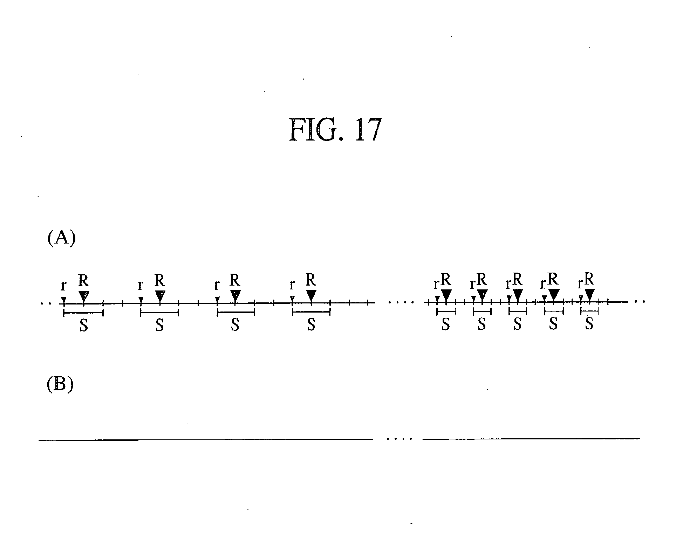

The timing of pushing the input button 4 in the dance battle of Step P11 of the game progress described above will be detailed with reference to FIG. 17. FIG. 17 is the time chart of the timing of pushing the input button.

From the speaker 13 of the game apparatus 1, a quadruple time music shown in FIG. 17(A) and a base music shown in FIG. 17(B) are flowing. A game player must push the input button 4 in good timing with the quadruple time music shown in FIG. 17(A).

In the music of the time shown in FIG. 17(A), the sound "Tan" R of the tambourine is outputted every 4 beats, and a rustle sound "Shaka" r, for example, is outputted a little before the sound "Tan" outputted every 4 beats. Successfully, the game player pushes the input button 4 at the time of the sound "Tan" R, but in the present embodiment, when the game player pushes the input button 4 in a period of time S including before and after the output of the sound "Tan" R, the input is judged to be "Success". When the game player pushes the input button 4 at a timing which is off the period of time S, the input is judged to be "Failure".

If a game player pushes the input button 4 when she hears the sound "Shaka" r, which is outputted one beat before the sound "Tan" R, the input is within the period of time S and judged to be "Success". Even infants can easily become good at the dance battle.

After a prescribed period of time has passed from the start of the dance battle, or when both game players are pushing the input buttons 4 in good timing even if the prescribed period of time has not passed, the intervals of the beats are shortened to increase the difficulty of the battle.

(Dressing Processing)

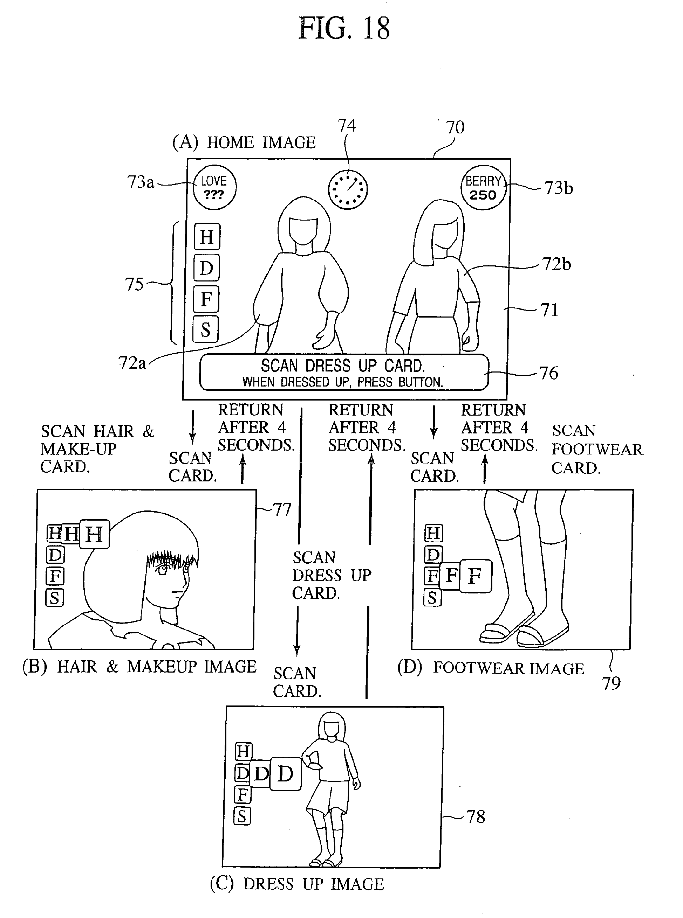

The dressing processing of the game of the game system according to the present embodiment will be detailed with reference to the game images illustrated in FIG. 18.

The dressing processing of the game of the present embodiment corresponds to Steps P05, P06 and P07 illustrated in FIG. 14 and Step P08 illustrated in FIG. 15.

The game image of FIG. 18 (A) is the dressing home image 70 of the dressing processing. In the dressing processing, the fashion magic card is scanned to dress a selected character.

The background 71 of the dressing home image 70 illustrated in FIG. 18 (A) is a dance site. The image of the dance site is in advance displayed so that the game player can imagine the dressing, because the point of the dressing is to make the character outstanding in the dance site. The dance site is a street illustrated in FIG. 13(A), a dance hall illustrated in FIG. 13(B) or an idol stage illustrated in FIG. 13(C).

At the center of the dressing home image 70 of FIG. 18(A), Witch Love, a character 72a and Witch Berry, a character 72b are displayed. An indicator 73a of the dress up power value of Love is indicated upper left on the dressing home image 70, and an indicator 73b of the dress up power value of Berry is displayed upper right on the dressing home image 70.

Here, when a game player selects Love on the left side, Love, who has just got up, is displayed in the character 72a wearing pajamas and slippers with the unkempt hair and without makeup. Berry, the character 72b is displayed, completely dressed. "???" is indicated for the dress up power value of Love, "250" is indicated for the dress up power value of Berry. The game player dresses Love, copying the character 72b of Berry on the right side of the dressing home image 70.

A clock 74 which indicates a remaining time for the dressing is indicated at the middle of the upper margin of the dressing home image 70. Dressing icons H, D, F, S of the 4 kinds of attributes of the game cards are indicated on the left side of the dressing home image 70.

A telop indication field 76 is provided at a lower part of the dressing home image 70. When no fashion magic card is inputted for a prescribed period of time from the time when the dressing home image 70 has been displayed, text which guides the game player to insert a fashion magic card "Scan dressing card", "Press button once you're done dressing up" is displayed.

Next, the dressing processing which is made when the game player inserts the fashion magic card in the game apparatus 1 will be explained.

The game player inserts one of the fashion magic cards she owns, which she thinks is suitable for a dance stage in TPO into the card reader 3 of the game apparatus 1 to input the selected fashion magic card, and the dressing icon 75, which is the attribute of the scanned fashion magic card is enlarged.

When the game player inserts the Hair & Makeup Card 20, the icon H of the dressing icons 75 is enlarged. The hair & makeup image 77 of FIG. 18(B) takes the place, and the head is zoomed up, and the character 72a, Witch Love is dressed with the hairdo and cosmetics of the inputted Hair & Makeup Card 20 while spinning, and the icon H is set. Then, after a prescribed time, e.g., 4 seconds, the image is returned to the dressing home image 70.

When the game player inserts the Dress Up Card 30 to input the Dress Up Card 30, the icon D of the dressing icons is enlarged, and the dress up image 78 of FIG. 18(C) takes the place. The character 72a is zoomed down, and the entire of the character 72a is displayed. While spinning, the character 72a, Witch Love is dressed in the clothes of the inputted Dress Up Card 30, and the icon D is set. Then, after a prescribed time, e.g., 4 seconds, the image is returned to the dressing home image 70.

When the game player inserts the Footwear Card 40 to input the Footwear Card 40, the icon F of the dressing icons 75 is enlarged, and the footwear image 70 of FIG. 18(D) takes the place. The Legs are zoomed up, and the character 72a, Witch Love steps like a model, and she wears the shoes of the inputted Footwear Card 40. The icon F is set. After a prescribed time, i.e., 4 seconds, the image is returned to the dressing home image 70.

When the game player inserts the Special Item Card 50 to input the Special Item Card 50, the icon S of the dressing icons 75 is enlarged, and the image corresponding to the content of the special dressing takes the place.

For example, the Special Item Card 50 for the miracle hair color of FIG. 9(A), which changes the hair color, is scanned, the hair & makeup image 77 of FIG. 18(B) takes the place. The hair color is changed, and the icon S is set. After a prescribed time, e.g., 30 seconds, the Special Item Card 50 is scanned again to thereby change the hair color to the next color.

(Character Generating Processing)

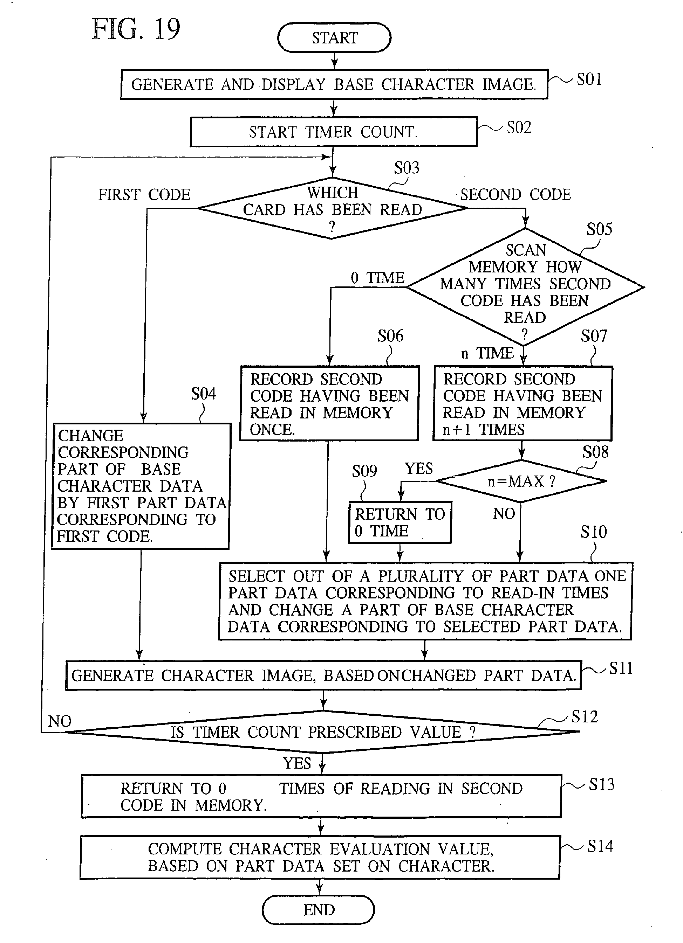

The character generating processing of the game of the game system according to the present embodiment will be explained with reference to FIG. 19. FIG. 19 is the flow chart of the operation sequence of the character generating processing of the present embodiment.

As described above, the game system according to the present embodiment includes, for the execution of the dressing game, the card tables for storing the original data of the respective game cards (FIGs. 10 and 11), and the dressing witch tables for storing the data (of head, legs, etc.) of the Oshare Majo (Lover or Berry) displayed on the monitor.

The card tables are stored in the program data memory device and memory medium 10 of the information processing device 100 and are loaded into the system memory 102 when the game program is executed. The Oshare Majo tables are stored in the system memory 102.

Initially, the Oshare Majo table stores prescribed base character data (of the head, trunk, feet, etc.). The base character data are model data name, texture data name, etc. of parts which make up the character having unkempt hair and wearing pajamas and slippers.

First, the model data and texture data are read by using as the key the model data name and the texture data name which are base character data stored in the Oshare Majo table to generate a base character image, and the base character image is displayed on the display monitor 5 (Step S01). The base character image is stored, divided corresponding to the respective part data, whereby when the part data are changed by the processing which will be described later, the data may be replaced corresponding to the respective part data, which makes it easy to change the data.

Next, the timer count is started to make a game player to input the card in a prescribed period of time to thereby start counting time to be taken for the character generating processing (Step S02).

Next, it is judged whether the code of the game card read by the card reader 3 of the game apparatus 1 is the first code or the second code (Step S03).

The first codes are assigned to the fashion magic cards 20, 30 40 of attributes H, D, F and are for the part data forming the head, trunk, feet of the character, e.g., model data of hairdos, clothes, hat, shoes, etc. The first codes are stored in the system memory 102 each associated with each of these model data.

The second codes are assigned to the fashion magic card 50. The second codes assigned to the Special Item Card (attribute S) are for a plurality of categories, e.g., hair colors, skin colors, accessories, etc. The second codes are stored in the system memory, each associated with each of the categories of hair colors, skin colors and accessories, etc.

The first codes and the second codes are different from each other in that the first codes are associated with the model data one-to-one, but the second codes are associated with the categories one-to-one. The categories of hair colors, skin colors, accessories, etc. are related to a plurality of the model data, and the second codes are associated with a plurality of model data.

In order to make more variations of the character images in generating the character images, more kinds of game cards are necessary. However, a larger number of game cards makes it difficult to select and input desired game cards within a required period of time. The part data of the major parts forming the character images are associated with the first codes one-to-one, and the second codes assigned to the auxiliary parts forming the characters are associated with the part data many-to-one, whereby every time one code is inputted, a selected auxiliary part can be sequentially changed. Thus, even with a small number of game cards, various character images can be generated.

When it is judged that the first code has been read in Step S03, Step S04 follows, and the part data corresponding to the code is read from the system memory, and the corresponding part of the base character data is changed to the read part data. For example, when the code of face data is read by the game card, the data of the face of the base character image is replaced by the face data corresponding of the code.

Hereafter, in Step S03, when another code of the face data is read, the data of the face of the base character image is replaced by the face data of the code.

In Step S03, when it is judged that the second code has been read, Step S05 follows, where it is judged based on read times data stored in the memory how many times the second code has been read (Step S05).

In Step S05, when it is judged that the second code has been read 0 time, the read times data is renewed to once (Step S06).

When it is judged that the second code has been read once or more (n times), the read times data is renewed to n+1 times (Step S07).

Step S03 is followed by Step S08, where it is judged whether or not the renewed read times has arrived at maximum times (MAX) of a changeable model data of the category (hair color, skin color, accessories, etc.) corresponding to the second code (Step S08).

In Step S08, when it is judged that the renewed read times have arrived at the maximum times (MAX), the read times are reset at 0 time. Thus, the game card is continuously inserted for the code input to thereby repeatedly change the changeable model data.

Next in Step S10, the part data corresponding to the read times value of the category corresponding to the second code in Step S05 is selected, and the corresponding part data of the base character image is replaced by the part data.

Next in Step S11, the character image reflecting the changes made in Step S04 and Step S10 is generated.

Next, it is judged whether or not a timer value whose count was started in Step S02 has arrived at a prescribed value (time limit) (Step S12).

When it is judged that the time value has not arrived at the prescribed value, the step is returned to Step S03. Again in Step S03, it is judged which code has been read by using the game card, and the steps of replacing the part of the character are repeated until the timer value arrives at the prescribed value.

When it is judged in Step S12 that the time value has arrived at the prescribed value, the time count is stopped, and the value is reset. In Step S13, the value of the read times of reading the second code in the memory is returned to 0. Thus, the part data to be first selected in generating the character next is the same, whereby in selecting the parts, desired part data can be selected only by counting an input times of the codes even without seeing the character image.

By the processing described above, the character image corresponding to the input game cards can be generated.

Next, in Step S14, a character evaluation value of the character image of the game player is computed based on all the part data finally changed corresponding to the input codes.

The character evaluation value is computed by setting classification information, e.g., casual, sexy, etc. for the part data of each category, and adding an evaluation value when it is judged that the part data of the same classification has been selected in each category and subtracting the evaluation value when it is judged that the part data of different classifications are mixed. It is also possible that a game player is informed of the classifications of casual, sexy, etc., and the evaluation value may be added based on numbers of the part data corresponding to the informed classifications.

(Dress up power Computing Method)

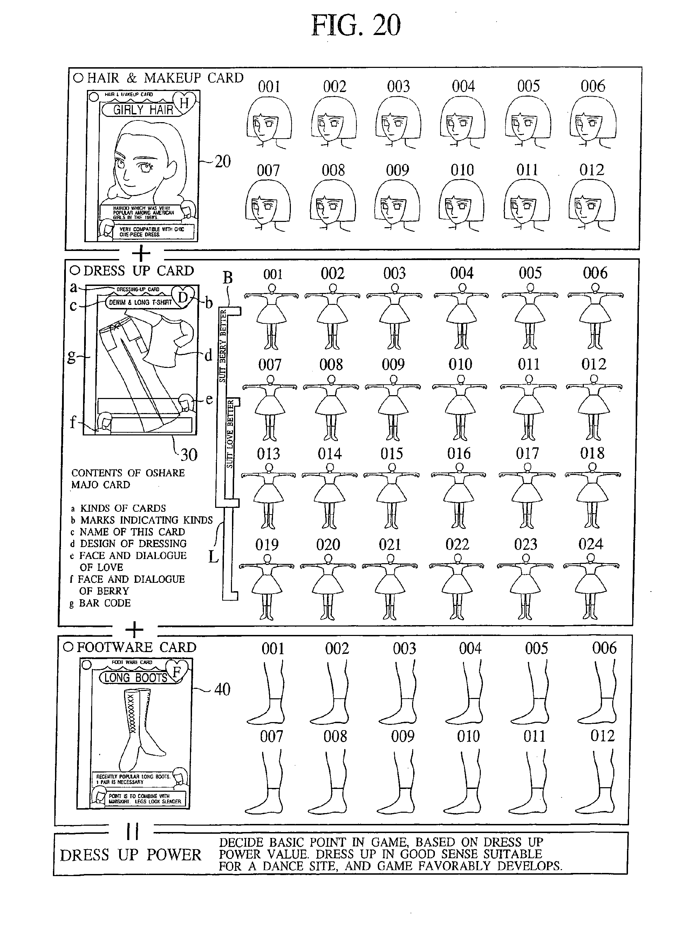

The method of computing the evaluation value (dress up power) of the character image generated by the character generating processing of the game of the game system according to the present embodiment will be explained with reference to FIG. 20. FIG. 20 is an explanatory view of the method for evaluating the dress up power. The fashion magic cards of different item numbers are a little different in the contents. In FIG. 20, for convenience, the game cards of the same attribute are illustrated by the same images so as to simplify the illustration.

The point of the dressing is to be conspicuous in the dance hall. The dress up power is determined by combinations of the game cards of the 3 kinds (H, D, F) of attributes of the head (hairdo, makeup), trunk (clothes) and feet (shoes).

The basic value of the respective fashion magic cards is the same, and the dress up power value is computed based on (a) the compatibility of the game cards with the site, (b) the compatibility of the game cards with the character (Lover or Berry), (c) the compatibility of the game cards with each other, etc.

As illustrated in FIG. 20, 12 kinds of the Hair & Makeup Cards (H) 20 are prepared for item numbers 001 to 012. The contents of the Hair & Makeup Cards are different for the item numbers, but the same image is illustrated for convenience.

24 kinds of Dress Up Cards (D) 30 are prepared for the item numbers 001 to 024. The contents of the Dress Up Cards are different for the item numbers but are illustrated by the same image for convenience.

12 kinds of Footwear cards (F) are prepared for the item numbers 001 to 012. The contents of the Footwear cards are different for the item numbers but are illustrated by the same image for convenience.

In the Special Item Cards (S) 50, although not illustrated, the attributes (H, D, F) of the game cards set corresponding to the item numbers are set as parameters.

The dress up power (P) is computed based on the basic value (F(YH), F(YD), F(YF)) of the respective game cards (YH, YD, YF), and the parameters of the various compatibilities ((a) the compatibility f(Y,K) of the game card (Y) with the site (K); (b) the compatibility f(Y,C) of the game cards (Y) with the character (C) (Love or Berry); and (c) the compatibility f(Y,Y) of the game cards (Y) with each other). One example of the computation formula for computing the dress up power (P) is described below.

$$P = F(YH) + F(YD) + F(YF)$$
$$+ f(Y,K) + f(Y,C) + f(Y,Y)$$

A game player competes in the dress up power by using the game cards to increase the dress up power value. Normally, a game player cannot always ideally dress up the character by using the fashion magic cards she owns. The game player competes in dressing the character near ideal by making the best use of the fashion magic cards she owns.

(Compatibility of Game cards with sites)

The compatibility of the game cards with the sites in computing the dress up power will be explained.

The dress up power value is basically determined by the combinations between the game cards and the 3 kinds of attributes (head (hairdo, makeup), trunk (clothes), foots (shoes)). However, the point of the dress up power in the game of the present embodiment is to be conspicuous in the dance sites.

Then, for the game cards of the same item number, parameters of different dress up powers corresponding to the sites (street, dance hall and idol stage) are set. This is the compatibility of the game cards with the sites.

For example, when a hairdo of a Hair & Makeup Card 20 is compatible with the street but incompatible with the dance hall, a higher parameter is set for the combination between the hairdo & makeup and the street, and a lower parameter is set for the combination between the hairdo & makeup and the dance hall.

(Compatibility of Game Card with Character)

The compatibility of the game card with the character in computing the dress up power will be explained.

For the Dress Up Card (D) 30, 24 Dress Up Cards (D) are related to the two witches, Witch Love and Witch Berry in terms of the character: cute (boyish) clothes match with Witch Love, and lady-like clothes match with Witch Berry. This is the compatibility of the game cards with the character (Love or Berry).

In the Dress Up Card (D) 30, 18 kinds of game cards corresponding to item numbers 007 to 024 are set suitable for the cute-type Witch Love, and 12 kinds of game cards corresponding to item numbers 007 to 018 are set suitable for the lady-like type Witch Berry. 12 kinds of game cards corresponding to item number 007 to 018 are set suitable for both of Witch Love and Witch Berry. That is, the clothes corresponding to a Dress Up Card 30 are suitable for Witch Love but unsuitable for Witch Berry. Thus, different parameters are set for combinations between the Dress Up Cards and the witch.

(Compatibility of Game Cards with Each Other)

The compatibility of the game cards with each other in the dress up power computation will be explained.

In the dress up power computation, correlation parameters are set for combinations of the fashion magic cards with each other. Correlation parameters for the Dress Up Card (D) combinations with the Hair & Makeup Card (H) and with the Footwear Card (F) are set.

For the Hair & Makeup Cards (H), several stages of parameters of the hairdos being suitable for the clothes of the Dress Up Cards (D) are set.

For the Footwear Cards (F), several stages of parameters of the footwear being suitable for the clothes of the Dress Up Cards (D) are set.

In the present embodiment, no correlation parameters are set for the combinations of the Hair & Makeup Cards (H) and the Footwear Cards (F). For the Special Item Cards (S), no correlation parameters are set for the combinations with the other game cards.

[A Second Embodiment]

The game system according to a second embodiment of the present invention will be explained with reference to the drawings.

(Game Cards)

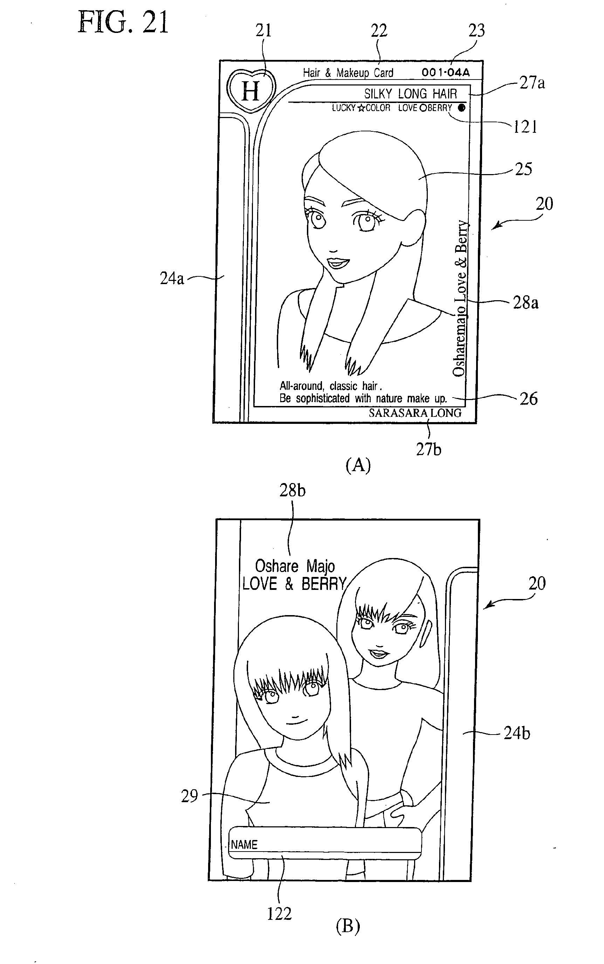

Examples of the game cards used in the game system according to the present embodiment are illustrated in FIGs. 21 to 24.

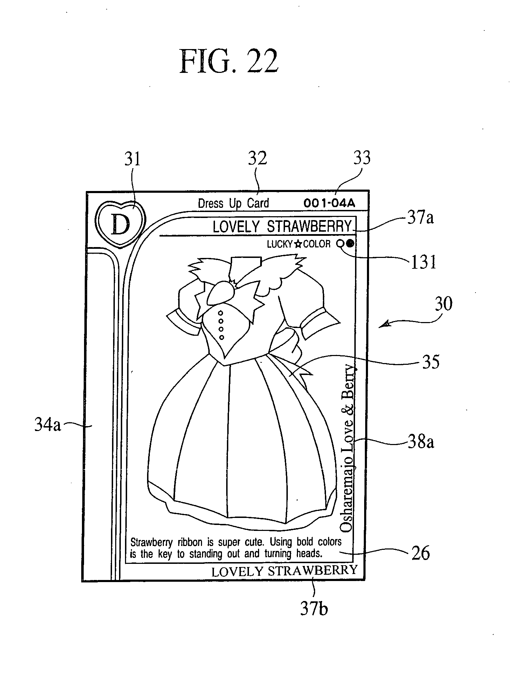

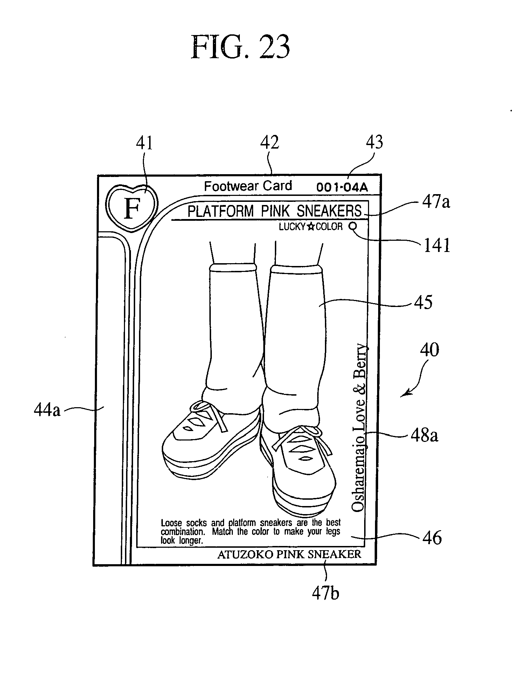

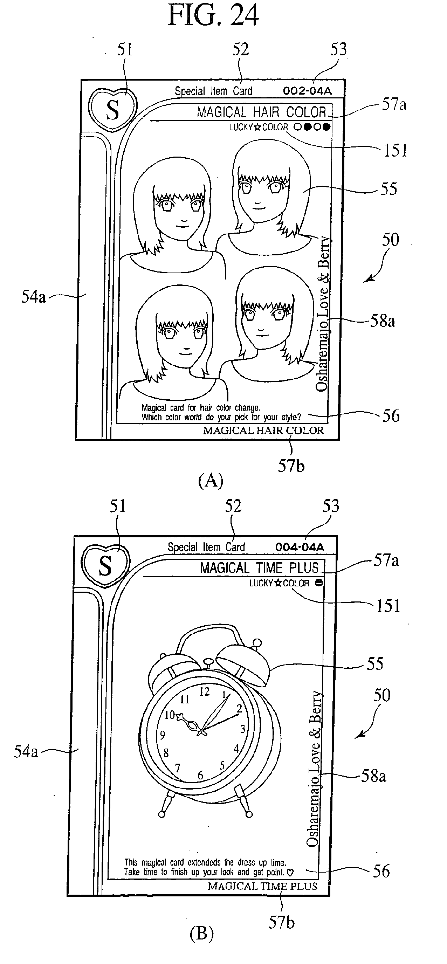

The game cards of the present embodiment are thick 88 mm-length and 63 mm-width paper cards of the so-called trump size. In the present embodiment, 4 kinds of game cards (fashion magic cards) are prepared; a Hair & Makeup Card for dressing the head (FIG. 21), a Dress Up Card for dressing the trunk (FIG. 22), a Footwear Card for dressing feet (FIG. 23), and a Special Item Card for special dressing up (FIG. 24).

The game cards of the present embodiment have lucky colors set in addition to the elements of the game cards of the first embodiment. Out of 8 lucky colors, 1 to 4 kinds of lucky colors are set on each game card. The card table (FIGs. 10 and 11) of each game card has a lucky color field, and the lucky color set for each game card is indicated.

(Hair & Makeup Card)

The Hair & Makeup Card will be explained with reference to FIG. 21. FIG. 21(A) illustrates the front side of the Hair & Makeup Card, and FIG. 21(B) illustrates the underside of the Hair & Makeup Card 20.

As illustrated in FIG. 21(A), an attribute field 21 indicating the attribute of the card is provided upper left on the front side of the Hair & Makeup Card 20. In FIG. 21(A), the design letter "H" is indicated in the attribute field 21.

In the upper margin of the front side of the Hair & Makeup Card, an attribute name indication field 22 is provided. In FIG. 21(A), "Hair & Makeup Card" is indicated in the attribute name indication field 22.

At the part of the front side of the Hair & Makeup Card 20, which is right of the attribute name indication field 22, an item number field 23 indicating an item number of the form 3 digits - 3 digits is provided. In FIG. 21(A), "001-04A" is indicated.

At the center of the front side of the Hair & Makeup Card 20, a bar code field 24a indicating a bar code to be read by the game apparatus 1 is provided. The bar code in the bar code field 24a has the bar contacted to the left edge.

At the center of the front side of the Hair & Makeup Card 20, a portrait field 25 indicating a face part corresponding to the item number of the card, and a comment field 26 indicating a comment are provided. In FIG. 21(A), a picture "silky long" is indicated in the portrait field 25, and "All around, classic hairdo. Be sophisticated with natural make up." is indicated in the comment field 26.

Below the item number field 23 at the upper right part of the front side of the Hair & Makeup Card 20, a title field 27a indicating a title corresponding to the item number of the card is provided. In FIG. 21(A), "Flowing long hair" is indicated in the title field 27a.

In the lower margin of the front side of the Hair & Makeup Card 20, a name field 27b indicating a name corresponding to an item number of the Card is provided. In FIG. 21(A), "SARASARA LONG" is indicated in the name field 27b.

In the right margin of the front side of the Hair & Makeup Card 20, a game title field 28a indicating the game title of the present game is provided. In FIG. 21(B), "Oshare Majo Love & Berry" is indicated in the game title field 28a.

Below the title field 27a at the upper right part of the front side of the Hair & Makeup Card 20, a lucky color indicating part 121 indicating the lucky color of the card is provided. In FIG. 21(A), "Lucky☆Color Loveo Berryº" is indicated in the lucky color indicating part 121.

In the circles of "Loveº Berryº", the lucky colors of the respective witches are indicated. There are eight lucky colors. The lucky color is inputted by scanning the game card 20 by the card reader 3 of the game apparatus 1 to be reflected in the game competition which will be described later.

For example, in calculating the dress up power value, a power value corresponding to the obtained lucky colors is added. For example, a value given by multiplying a number of the lucky colors by 10 points may be added to the fashionable power value.

As illustrated in FIG. 21(B), in the right margin of the underside of the Hair & Makeup Card 20, a bar code field 24b indicating a bar code for the game apparatus 1 to read the bar code is provided. The bar code field 24b corresponds to the bar code field 24a on the front side of the Hair & Makeup Card 20, and the length, width and contents of the bar code are same. The bar of the bar code in the bar code field 24b contacts the right edge of the card 20.

At an upper part of the underside of the Hair & Makeup Card, a game name field 28b indicating the game title of the present game is provided. At the center of the underside of the Hair & Makeup Card 20, a portrait field 29 indicating a typical image of the present game is provided. In FIG. 21(B), "Oshare Majo Love and Berry" is indicated in the game name field 28b, and a portrait of a uniform picture is indicated in the portrait field 29.

At a lower part of the underside of the Hair & Makeup Card 20, a blank name field 122 for the owner of the game card to write the name is provided.

The undersides of the game cards of different attributes have the uniform picture but have different background colors corresponding to the attributes. When a game player looks at the game card, she can easily recognize which attribute the card has but cannot easily recognize the difference of the bar code. Thus, a game player has the attribute of the game card recognized by the competitor but can use the game card without the item being recognized by the competitor.

(Dress Up Card)

The Dress Up Card will be explained with reference to FIG. 22. FIG. 22 illustrates the front side of the Dress Up Card 30.

As illustrated in FIG. 22, at an upper left part of the front side of the Dress Up Card 30, an attribute field 31 indicating the attribute of the card is provided. As illustrated in FIG. 22, in the attribute field 31, the design letter "D" is indicated in the heart.

In the upper margin of the front side of the Dress Up Card 30, an attribute name indication field 32 indicating the attribute name of the card is provided. In FIG. 22, "Dress Up Card" is indicated in the attribute name indication field 32.

At a part of the front side of the Dress Up Card 30, which is right of the attribute name indication field 32, an item number field 33 indicating the item number of the form 3 digits - 3 digits is provided. In FIG. 22, "001-04A" is indicated in the item number field 33.

In the left margin of the front side of the Dress Up Card 30, a bar code field 34a indicating the bar code for the game apparatus 1 to read is provided. The bar of the bar code in the bar code field 34a contacts the left edge.

At the center of the front side of the Dress Up Card 30, a clothes picture field 35 indicating the trunk corresponding to the item number of the card, and a comment field 36 are provided. In FIG. 22, the picture of "Lovely Strawberry" is indicated in the clothes picture field 35, and "Strawberry ribbon is very cute. If you want to stand out, the key is to use bold colors." is indicated in the comment field 36.

Below the item number field 33 at the upper right part of the front side of the Dress Up Card 30, a title field 37a indicating the title corresponding to the item number of the card is provided. In FIG. 22, "Lovely Strawberry" is indicated in the title field 37a.

In the lower margin of the front side of the Dress Up Card 30, a name field 37b indicating the name corresponding to the item number of the card is provided. In FIG. 22, "LOVELY STRAWBERRY" is indicated in the name field 37b.

On the right margin of the front side of the Dress Up Card 30, a game title field 38a indicating the game title of the present game is provided, In FIG. 22, "Osharemajo Love & Berry (Oshare Majo Love and Berry)" is indicated in the game title field 38a.

Below the name field 37a on the upper right of the fronts side of the Dress Up Card 30, a lucky color indicating part 131 indicating the lucky color of the card is provided, In FIG. 22, "Lucky ☆ Color ○ ○ " is indicated in the lucky color indication field 131.

Lucky colors, white and red are indicated respectively in the circles of "○ ○ ". There are eight lucky colors. The lucky colors are inputted by the game card 3 being scanned by the card reader 3 of the game apparatus 1 and are reflected in the competition game, which will be described later.

The underside of the Dress Up Card 30 is the same as the underside of the Hair & Makeup Card 20 illustrated in FIG. 22(B) but is different in the background color.

(Footwear Card)

The Footwear Card will be explained with reference to FIG. 23. FIG. 23 illustrates the front side of the Footwear Card 40.

As illustrated in FIG. 23, on the upper left of the front surface of the Footwear Card 40, an attribute field 41 indicating the attribute of the card is provided. In FIG. 23, the design letter "F" is indicated in the heart in the attribute field 41.

In the upper margin of the front surface of the Footwear Card 40, an attribute name indication field 42 indicating the attribute name of the card is provided. In FIG. 23, "Footwear Card" is indicated in the attribute name field 42.

At a part of the front side of the Footwear Card 40, which is right of the attribute name indication field 42, an item number field 43 indicating the item number of the form 3 digits - 3 digits is provided. In FIG. 23, "001-04A" is indicated in the item number field 43.

In the left margin of the front side of the Footwear Card 40, a bar code field 44a indicating the bar code for the game apparatus 1 to read the card is provided. The bar of the bar code in the bar code field 44a contacts the left edge.

At the center of the front side of the Footwear Card 40, a shoes image field 45 indicating the legs corresponding to the item number of the card, and a comment field 46 indicating a comment are provided. In FIG. 23, the picture of "platform pink sneakers" is indicated in the shoes image field 45, and "Loose socks and platform sneakers are the best combination! Match the colors to make you legs look longer." is indicated in the comment field 46.

Below the item number field 43 at the upper right of the front side of the soft ware card, the name corresponding to the item number of the card is provided. In FIG. 23, "Thick Sole Pink Sneakers" is indicated in the name field 47a.

In the lower margin of the front side of the Footwear Card 40, a name field 47b indicating the name corresponding to the item number of the card is provided. In FIG. 23, "ATSUZOKO PINK SNEAKER (THICK SOLE PINK SNEAKER)" is indicated in the name field 47b.

In the right margin of the front side of the Footwear Card 40, a game title field 48a indicating the game title of the present game is provided. In FIG. 23, "Oshare Majo Love & Berry" is indicated in the game title field 48a.

Below the name field 47a on the upper right of the front side of the Footwear Card 40, a lucky color indication field 141 indicating the lucky color of the card is provided. In FIG. 23, "Lucky ☆ Color º " is indicated in the lucky color indication field 141.

The lucky color, pink is indicated in the circle. There are eight lucky colors. The lucky color is inputted by the game card 40 being scanned by the card reader 3 of the game apparatus 1 and is reflected in the competition game, which will be described later.

The underside of the Footwear Card 40 is the same as the underside of the Hair & Makeup Card 20 illustrated in FIG. 22(B) but is different in the background color.

(Special Item Card)

The Special Item Card will be explained with reference to FIG. 24. In the present embodiment, the Special Item Card 50 has four kinds of miracle foundation, magical hair color, miracle hair color and magical time plus. FIG. 24(A) illustrates the front side of the Special Item Card 50 of the magical hair for changing the hair color, and FIG. 24(B) illustrates the front side of the Special Item Card 50 of the magical time plus for increasing the input time. The underside of the special miracle card 50 is the same as the underside of the Hair & Makeup Card 20 illustrated in FIG. 6(B) but is different in the background color.

First, the Special Item Card illustrated in FIG. 24(A) will be explained.

On the upper left of the front side of the Special Item Card 50, an attribute field 51 indicating the attribute of the card is provided. In FIG. 24(A), the design letter "S" is indicated in the heart in the attribute field 51.

In the upper margin of the front side of the Special Item Card 50, an attribute name indication field 52 indicating the attribute name of the card is provided. In FIG. 24(A), "Special Item Card" is indicated in the attribute name field 52.

At a part of the front side of the Special Item Card 50, which is right of the attribute name indication field 52, an item number field 53 indicating an item number of the form 3 digits - 3 digits is provided. In FIG. 24(A), "002-04A" is indicated in the item number field 53.

In the left margin of the front side of the special card item 50, a bar code field 54a indicating a bar code for the game apparatus 1 to read is provided. The bar of the bar code in the bar code field 54a contacts the left edge.

At the center of the front side of the Special Item Card 50, a design picture field 55 indicating a design image corresponding to the item number of the card, and a comment field 56 indicating a comment are provided. In FIG. 24 (A), pictures of portraits of 4 heads having different hair colors, green, purple, black and yellow are indicated in the design image field 55, and "Magical card for hair color change. Which color would you seek for your style?" is indicated in the comment field 56.

Every time this Special Item Card 50 is scanned by the card reader 3, the hair color of the character is changed. In other words, every time the Special Item Card 50 is scanned, the hair color is changed to the next color, and when the Special Item Card 50 has been scanned for all the colors, then the hair color is returned to the first hair color.

Below the item number field 53 on the upper right of the front side of the Special Item Card 50, a name field 57a indicating the name corresponding to the item number of the card is provided. In FIG. 24(A), "Magical Hair" is indicated in the name field 57a.

In the lower margin of the front side of the Special Item Card 50, a name field 57b indicating the name corresponding to the item number of the card is provided. In FIG. 24(A), "Magical hair color" is indicated in the name field 57b.

In the right margin of the front side of the Special Item Card 50, a game title field 58b indicating the game title of the present game is provided. In FIG. 24(A), "Osharemajo Love & Berry" is indicated in the game title field 58a.

Below the name field 57a on the upper right of the front side of the Special Item Card 50, a lucky color indication field 151 indicating the lucky color of the card is provided. In FIG. 24(A), "Lucky☆Color º º º" is indicated in the lucky color indication field 151.

Four kinds of lucky colors are indicated in the "º º º º". There are eight lucky colors. The lucky colors are inputted by the game card 50 being scanned by the card reader 3 of the game apparatus 1 and are reflected in the game competition, which will be,described later.

Next, the Special Item Card illustrated in FIG. 24(B) will be explained.

On the upper left of the front side of the Special Item Card 50, an attribute field 51 indicating the attribute of the card is provided. In FIG. 24(B), the design letter "S" is indicated in the heart in the attribute field "S".

In the upper margin of the front side of the Special Item Card 50, an attribute name indication field 52 indicating the attribute of the card is provided. In FIG. 24(B), "Special Item Card" is indicated in the attribute name field 52.

At a part of the front side of the special card 50, which is on the right of the attribute name indication field 52, an item number field 53 indicating an item number of the form 3 digits - 3 digits is provided. In FIG. 24(B), "004-04A" is indicated in the item number field 53.

In the left margin of the front side of the Special Item Card 50, a bar code field 54a indicating a bar code to be read by the game apparatus 1 is provided. The bar of the bar code in the bar code field 54a contacts the left edge.

At the center of the front side of the Special Item Card 50, a portrait field 55 indicating a portrait corresponding to an item number of the card, and a comment field 56 indicating a comment are provided. In FIG. 24(B), a design of "Alarm Clock" is indicated in the portrait field 55, and in the comment field 56, "This magical card extends the dress up time. Take time to finish up your look and get point." is indicated.

When a game player causes the magic card 20 to be scanned by the card reader 3, the input must be made in a prescribed period of time. The Special Item Card 50 is used when the input period of time must be extended. When the Special Item Card 50 is scanned by the card reader 3, the input period of time is increased by prescribed time. However, the special card 50 can be used only once for one input.

Below the item number field 53 on the upper right of the front side of the Special Item Card 50, a number field 57a indicating the name corresponding to the item number of card is provided. In FIG. 24(B), "Magical time plus" is indicated in the name field 57a.

In the lower edge of the front side of the Special Item Card 50, a name field 57b indicating the name corresponding to the item number of the card is provided. In FIG. 24(B), "Magical time plus" is indicated in the name field 57b.

In the right margin of the front side of the Special Item Card 50, a game title field 58b indicating the game title of the present game is provided. In FIG. 24(B), "Oshare Majo Love & Berry" is indicated in the game title field 58b.

Below the name field 57a upper right on the front side of the Special Item Card 50, a lucky color indication field 141 indicating the lucky color of the card is provided. In FIG. 24(B), "Lucky ☆ Color º " is indicated in the lucky color indication field 151.

A lucky color is indicated in the " º ". There are eight lucky colors. The lucky color is inputted by the game card 50 being scanned by the card reader 3 of the game apparatus 1 and is reflected in the game competition, which will be described later.

The other Special Item Cards, the miracle hair color card and the miracle foundation card have the same design, and they are not illustrated.

"o o o o " is indicated in the lucky color indication field 151 of the miracle hair color card. Red, pink, orange and white are indicated in the respective circles corresponding to the hair colors of the portraits.

"º º º º" is indicated in the lucky color indication field 151 of the miracle foundation card, and orange, white and black colors are indicated in the respective circles.

(Lucky Color)

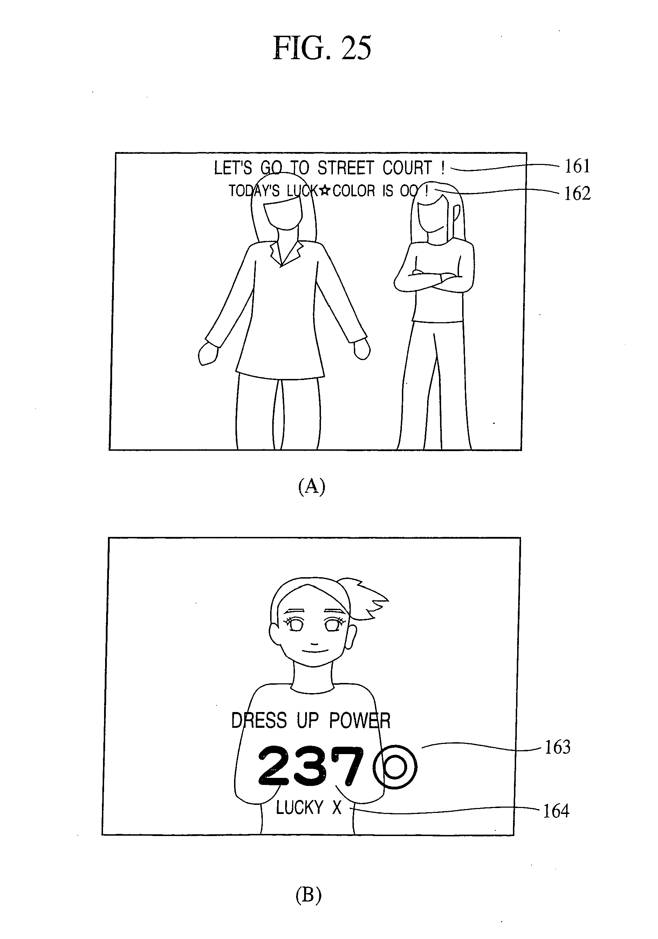

The lucky color of the game of the game system according to the present embodiment will be explained with reference to FIG. 25.

To start the dressing game, a game player selects Love or Berry to be dressed, and the game image of FIG. 25(A) is displayed on the display monitor 5 of the game apparatus 1.

FIG. 25(A) illustrates the starting image of the dressing game. In a guide indication 161 at the upper part of the game image, on which stage the dressing game is played is indicated by "I'll go to the street court!", and in the game lucky color field 162 below the guide field 161, the lucky colors for the dressing game to be played (game lucky colors) are indicated by "Today's lucky☆colors are º º !".

The game lucky colors, and a number of the game lucky colors are selected by the game apparatus 1 at random. In the game image of FIG. 25(A), the 2 colors indicated in " º º " in the game lucky color field 162 are the game lucky colors.

In the dressing game of the present embodiment, the same dressing processing as in the first embodiment is made, and independently thereof, the lucky colors are judged. When the game player inputs, for the scan, the game card for the dressing, it is judged whether or not the lucky color set in the game card is identical with one of the game lucky colors, and the number of the identical colors is counted.

In the dressing game of the present embodiment, considering the indicated game lucky colors, the game player sees the lucky colors indicated on the sides of the fashion magic cards 20, 30, 40, 50 and selects one of the cards, and inputs the card for the scan. 1 - 4 lucky colors are set in the fashion magic cards 20, 30, 40, 50, and if one of the game cards 20, 30, 40, 50 has the lucky color identical with either of the game lucky colors, the game player gives the card the priority of being used.

Every time the game player inputs the game card 20, 30, 40, 50 for the scan, the game image of FIG. 25 (B) is displayed. A dress up power value, and a mark indicating its standard are indicated in the dress up power field 163 by "Dress up power 237 ◎" at the lower center of the game image of FIG. 25(B), and in the lucky color judgment field 164 lower the dress up power field 163, the result of the lucky color judgment of the game card inputted for the scan is indicated by "Lucky ×".

The marks indicating the dress up power in the dress up power field 163 are set to be, e.g., "◎ ", "o ", "△ ", and "×" in the sequence of larger dress up power values.

In the lucky color judgment field 164, when the lucky color of the game card inputted for the scan is identical with a game lucky color, "o" is indicated, and when the lucky color of the game card inputted for the scan is not identical, "×" is indicated.

In the present embodiment, 4 kinds of the game cards (fashion magic cards) are prepared. The Hair & Makeup Card (H) for dressing the head, the Dress Up Card (D) for dressing the trunk, the Footwear Card (F) for dressing the foot and the Special Item Card (S) for special dressing are prepared.

In the present embodiment, the lucky colors which can be inputted are different depending on the attributes of the game cards.

With the Hair & Makeup Card (H) for dressing the head, two kinds of lucky colors for the hair color and the skin color can be inputted. The lucky colors of the Hair & Makeup Card (H) are basic, but hair & makeup colors can be inputted also with the three special cards (S): the miracle hair color card, the magical hair color card and the miracle foundation card.

The lucky color of the hair color is decided by the hair color of the Hair & Makeup Card (H). Then, the hair color is changed by inputting for the scan the Special Item Card (S) of the miracle hair color card or the magical hair color card, and the lucky color is accordingly changed.

The lucky color of the skin color is decided by the skin color of the Hair & Makeup Card (H). Then, the skin color is changed by inputting the Special Item Card (S) of the miracle foundation card, and the lucky color is accordingly changed.

With the Dress Up Card (D) for dressing the trunk, one kind of lucky color for the clothes can be inputted. The color of the clothes is changed by inputting the Special Item Card (S) for the scan, and the lucky color is accordingly changed.

With the Footwear Card (F) for dressing the foot, one kind of lucky color for the shoes can be inputted. The color of the shoes is changed by inputting for the scan the Special Item Card (S), and the lucky color can be accordingly changed.

All the parts are dressed by using the game cards, and two kinds of the lucky color for the head, one kind of lucky color for the trunk and one kind of lucky color for the foot, in total four kinds of lucky colors at most can be inputted.

When the total dress up power is judged, the lucky color judgment is indicated for numbers of the lucky colors. For example, "×" is indicated for no lucky color; "△", for 1 lucky color; "o", for 2 lucky colors; "◎", for 3 lucky colors; and "flower ◎ ", for 4 lucky colors. The lucky color judgment may be indicated by a 2-stage indication of "×" for no lucky color and "o" for at least 1 lucky color.

(Dance Battle)

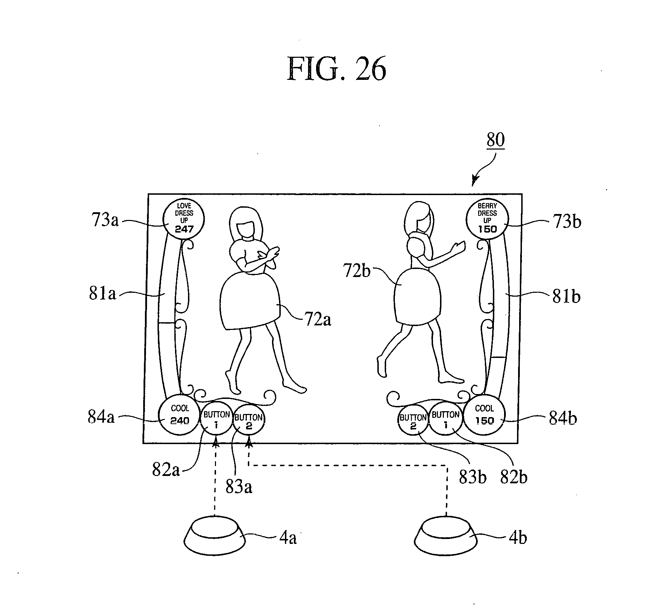

The dance battle of the game of the game system according to the present embodiment will be explained with reference to FIGs. 26 to 30. In the present embodiment, a game player can be assisted in the man vs. computer dance battle by other people in the input operation. Assuming that the game players are infants and school children, their parents assist them in the input operation.

(Dance Battle Image)

FIG. 26 illustrates the game image 80 of the dance battle and the two input buttons 4a, 4b disposed respectively on the left and the right on the operation desk 2 of the game apparatus 1.

In the dance battle image 80 of FIG. 26, the street is the site, and two witches (Lover and Berry) who have been dressed up by the fashion magic compete in the dance battle.

In the dance battle image 80, the characters 72a, 72b are displayed side by side, and the indicators 81a, 81b of the "cool point" are displayed length-wise. The dress up power values 73a, 73b computed based on the various parameters which will be described later are indicated together with the witch names (Lover & Berry) on the upper left and the upper right of the image. The dress up power of Witch Love is "247", and the dress up power of Witch Berry is "150" here.

Below the indicators 81a, 18b on the upper left and the upper right of the image, cool point indication fields 84a, 84b indicate the current cool points in figures in circles. The cool point of Witch Lover is "240", and the cool point of Witch Berry is "150" here.

On the right of the cool point indication field 84a, an input judgment field 82a indicated by "Button 1" and an input judgment field 83a indicated by "Button 2" are provided. On the left of the cool point indication field 84b on the right, an input judgment field 82b indicated by "Button 1" and an input judgment field 83b indicated by "Button 2" are provided. The input judgment fields 82a, 82b indicated by "Button 1" are displayed larger than the input judgment fields 83a, 83b indicated by "Button 2".

It is assumed that when a main game player operates Witch Love 72a on the left side of the dance battle image 80, the main game player, an infant operates the input button 4a on the left side of the operation desk 2, and the mother of the infant, etc. operates the input button 4b on the right of the operation desk 2. The input button 4a on the left of the operation desk 2 corresponds to the large input judgment field 82a indicated by "Button 1", and the input button 4b on the right of the operation desk 2 corresponds to the small input judgment field 83a indicated by "Button 2".

It is assumed that when a main game player operates Witch Berry 72b on the right side of the dance battle image 80, the main game player, an infant operates the input button 4b on the right side of the operation desk 2, and the mother of the infant, etc. operates the input button 4a on the left side of the operation desk 2. The input button 4b on the right of the operation desk 2 corresponds to the larger input judgment field 82b indicated by "Button 1", and the input button 4a on the left of the operation desk 2 corresponds to the input judgment field 83b indicated by "Button 2".

Based on whether or not the main player and the sub-player have pushed the input buttons 4a, 4b on the operation desk 2 in good timing, "O" "X" are indicated in the input judgment fields 82a, 82b, 83a, 83b. The input timing judgment will be detailed below.

(Button Input Judgment (Part 1))

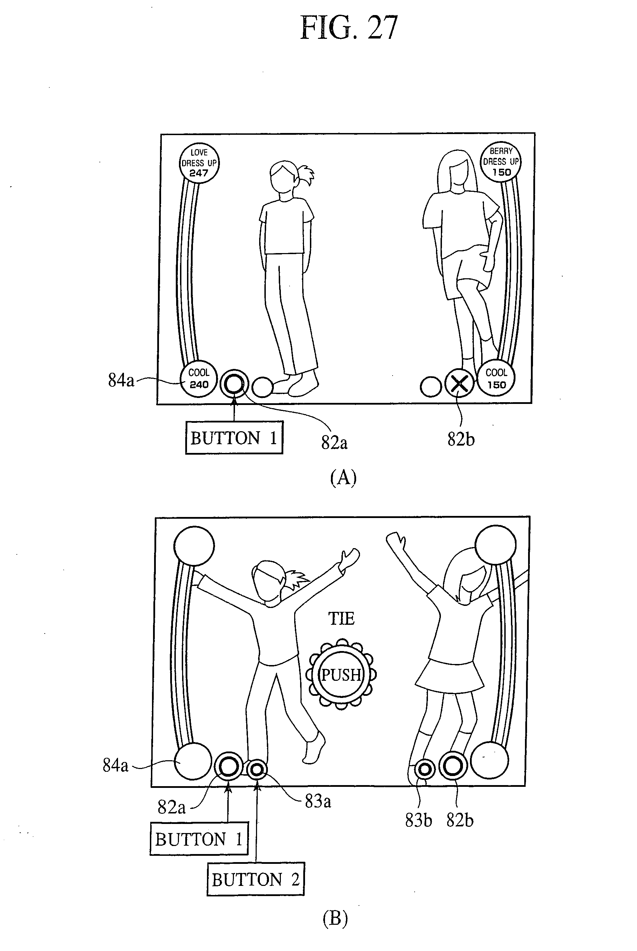

One example of the button input judgment of the game system according to the present embodiment will be explained with reference to FIG. 27.

In the dance battle image 80, game players push the input buttons 4a, 4b in accordance with music and a beat. The game players cheer Love or Berry to maintain Love or Berry dressed up. While Love or Berry are kept dressed up, the "cool point" goes up with time. The increase changes depending on values of the dress up power and the correctness of the timing of pushing the input buttons 4a, 4b.

FIG. 27 illustrates images in the battle. A game player operates Witch Love on the left side in the dance battle image 80, and a computer operates Witch Berry on the right side.

FIG. 27(A) illustrates an image displayed when the game player pushes the button 1 in good timing, and the computer pushes the button 1 out of timing. The computer does not actually push the button 1; an internal processing is made. An O mark is indicated in the input judgment field 82a of the game player side, and an X mark is indicated in the input judgment field 82b on the computer side. Operational inputs are made by no sub-player, and no marks are indicated in the input judgment fields 83a, 83b on both sides.

FIG. 27(B) illustrates an image displayed when, on the game player side, the main player pushes the button 1 in good time, and the sub-player also pushes the button 2 in good time; and, on the computer side, the main player pushes the button 1 in good time, and the sub-player also pushes the button in good time. The computer does not actually push the button 1 and the button 2; an internal processing is made. On the game player side, the ○ mark is indicated in the input judgment field 82a, and the ○ mark is indicated in the input judgment field 83a; and on the computer side, the O mark is indicated in the input judgment field 82b, and the O mark is indicated in the input judgment field 83b. The game player side and the computer side have the same result, and "Tie" is indicated above the indication of "Push".

The indications of the input judgment fields 82a, 82b corresponding to inputs made by the button 1 by the main player and the button 2 on the player side, and the indications of the indicator 81a and the cool point indication field 84a will be explained.

When the input made by the main player with the button 1 is successful, and the input made by the sub-player with the button 2 is successful, the ○ mark is indicated in both of the input judgment fields 82a, 83a. The indications of the indicator 81a and the cool point indication field 84a are increased by 1 point.

When the input made by the main player with the button 1 is successful, and the input made by the sub-player with the button 2 is unsuccessful, the O mark is indicated in the input judgment field 82a of the main player, and in the input judgment field 83a of the sub-player, nothing is indicated. The indications of the indicator 81a and the cool point indication field 84a are both increased by 1 point.

When the input made by the main player with the button 1 is unsuccessful, and the input made by the sub-player with the button 2 is unsuccessful, the X mark is indicated in the input judgment field 82a of the main player, and in the input judgment field 83a of the sub-player, nothing is indicated. The indications of the indicator 81a and the cool point indication field 84a are not changed at all.

When the input made by the main player with the button 1, and the input made by the sub-player with the button is unsuccessful, the X mark is indicated in the input judgment field 82a of the main player, and in the input judgment field 83a of the sub-player, nothing is indicated. The indications of the indicator 81a and the cool point indication field 84a, nothing is indicated.

As described above, when either of the main player and the sub-player is successful, points of the indicator 81a and the cool point indication field 84a are increased. Points of the indicator 81a and the cool point indication field 84a are not changed without increases only when both the main player and the sub-player are unsuccessful. The ○ mark is indicated in the input judgment field 83a of the sub-player when the sub-player is successful, but when the sub-player is unsuccessful, nothing is indicated.

The indications of the input judgment fields 82b, 83b corresponding to the input made by the main player with the button 1 and by the sub-player with the button 2 on the computer side, and the indications of the indicator 81b and the cool point indication field 84b will be explained.

When the input made by the main player with the button 1 is successful, the O mark is indicated in the input judgment field 82b. The points of the indicator 81a and the cool point indication field 84a are both increased by 1 point. When the input made by the main player with the button 1 is unsuccessful, the X mark is indicated in the input judgment field 82b. The points of the indicator 81a and the cool point indication field 84a are not changed. In the input judgment field 83b, nothing is indicated.

(Button Input Judgment (Part 2))

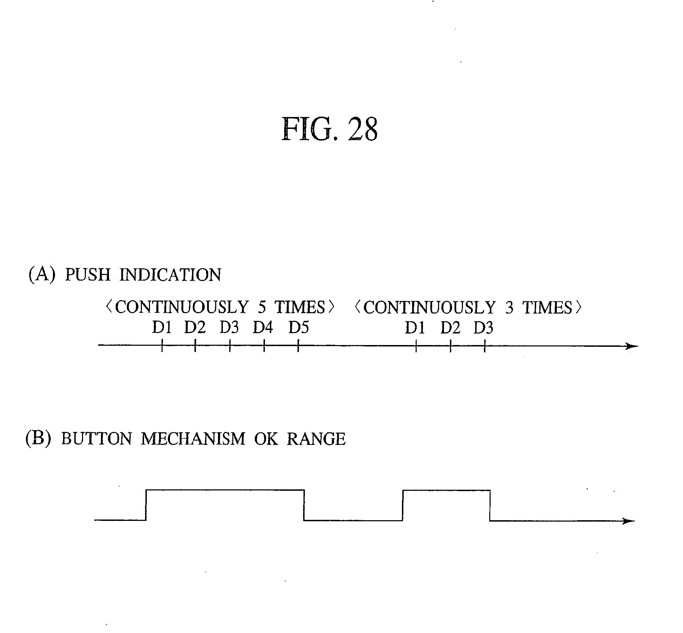

Another example of the button input judgment of the game system according to the present embodiment will be explained with reference to FIGs. 28 to 30.

In the dance battle image 80, the input buttons 4a, 4b are pushed in accordance with indications of "Push" in the image, which guides game players to push the input buttons. To push the input buttons 4a, 4b in accordance with a single indication of "Push" requires skill and is difficult for school children and infants.

Then, in the present embodiment, conditions for judging the input successful are set as follows: As illustrated in FIG. 28, "Push" is indicated continuously a plurality of times (FIG. 28(A)). The duration in which "Push" is continuously indicated is an OK range (FIG. 28(B)), and the inputs made by pushing the input buttons 4a, 4b in any timing in the OK range is judged successful. When the number of times the input buttons 4a, 4b are pushed in the OK range is identical with the number of times "Push" is indicated in the OK range, the inputs are judged successful. Furthermore, the number of times the input buttons 4a, 4b are pushed in the OK range can be attained by the cooperation of the main player and the sub-player.

As exemplified in FIG. 28(A), when the indications of "Push" are made continuously 5 times, and either of the main player and the sub-player pushes the input buttons 4a, 4b just 5 times, the input is judged "successful". When the main player pushes 3 times, and the sub-player pushes twice, i.e., the total times of the push of the input buttons 4a, 4b by the main player and the sub-player is 5 times, the input is judged "successful" as the cooperational play of the main player and the sub-player. The cases other than these cases are judged "unsuccessful".

When the indication of "Push" is made continuously 3 times as illustrated in FIG. 28(A), and either of the main player and the sub-player pushes the input button 4a, 4b just 3 times, the input is judged "successful". When the main player pushes once, and the sub-player pushes twice, i.e., the total of the times of the push of the input buttons 4a, 4b by the main player and the sub-player in the OK range is 3 times, the input is judged "successful" as the cooperative play of the main player and the sub-player. The cases other than these cases are judged "unsuccessful".

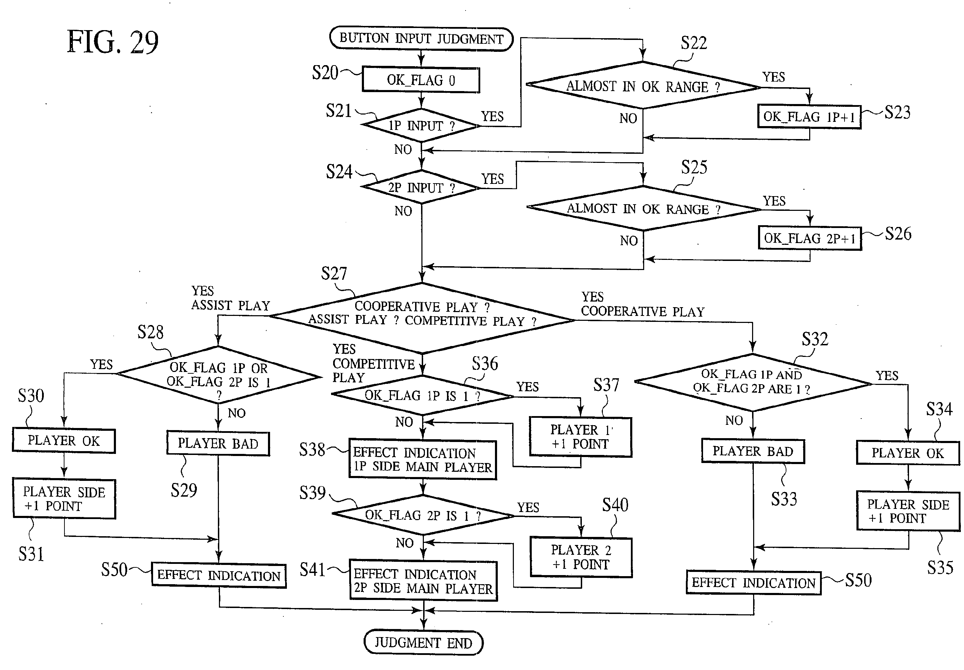

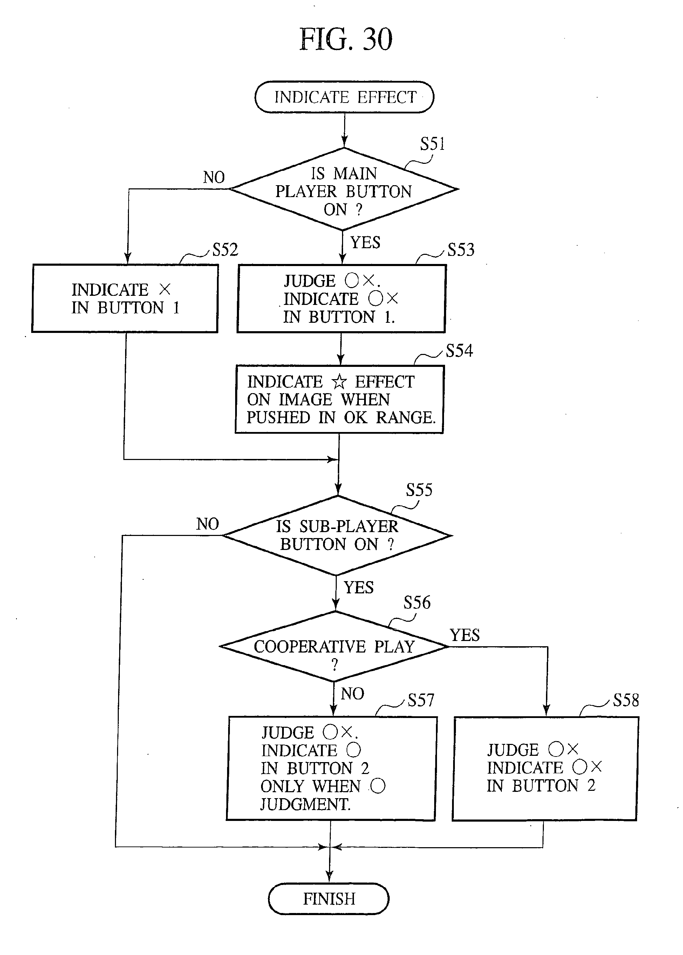

The present example of the button input judgment will be further detailed with reference to FIGs. 29 and 30. FIGs. 29 and 30 are the flow chart of the button input judgment.

In the present example, to start the dressing game, a game player selects on a selection image one of the game modes, the assist play, the cooperative play and the competitive play.

To start the button input judgment, the OK flags (P1, P2) of the input buttons 4a, 4b are set at the initial value (Step S20).

Next, it is judged whether or not the input with the input button 4a on 1 Player Side (the main player side) has been made (Step S21). When the input on 1 Player Side has been made, it is judged whether or not the input is in the OK range (Step S22). When the input on 1 Player Side has been made in the duration in which the indication of "Push" is being made, i.e., the OK range, the OK flag (P1) of the input button 4a is 1 (Step S23).

In Step S21, when the input is not made on 1 Player Side, or in Step S22, when the input is not in the OK range, it is judged whether or not the input on 2 Player Side has been made (Step S24).

When the input has been made on 2 Player Side, it is judged whether or not the input is in the OK range (Step S25). When the input on 2 Player Side is in the OK range, the OK flag (P2) of the input button 4b is 1 (Step S26).

In Step S24, when the input is not made on 2 Player Side, or in Step S25, when the input is not in the OK range, it is judged whether or not the present game mode is the cooperative play, the assist play or the competitive play, in which 2 game players compete (Step S27).

In Step S27, when the current game mode is judged to be the assist mode, it is judged whether or not the value of the OK flag (P1) or the OK flag (P2) is 1 (Step S28).

When neither of the OK flags are "1", "BAD" is indicated on the player character, and the game player is judged to have failed in the button operation (Step S29).

When either of the OK flags is "1", "OK" is indicated on the player character, and the game player is judged to have succeeded in the button operation, and 1 point is added to the cool point (Step S31). Based on the results in Step S29 and Step S31, the indication effect of success is made on the image (Step S50), and the judgment is completed.

In Step S27, when the current game mode is judged to be the cooperative play, it is judged whether or not both the OK flag (P1) and the OK flag (P2) are 1 (Step S32).

When neither of the OK flag (P1) and the OK flag (P2) are 1, "BAD" is indicated on the player character, and the game player is judged to have failed in the button push (Step S33).

When the OK flag (P1) and the OK flag (P2) are both 1, "OK" is indicated on the player character, and the button push is judged successful (Step S34), and 1 point is added to the cool point on the player character side (Step S35). Based on the results of Step S33 and Step S35, the indication effect of success is made on the image (Step S50), and the judgment is completed.

In Step S27, when the current game mode is judged to be the competitive play, it is judged whether or not the OK flag (P1) is 1 (Step S36).

When the OK flag (P1) is 1, i.e., when successful, 1 point is added to the cool point of Player 1 (Step S37), and Step S38 follows. When the OK flag (P1) is not 1, i.e., when unsuccessful, the cool point remains as it is, and Step S38 follows. In Step S38, the judgment result is indicated by "O" or "X" on the button 1 of the input judgment field of the main player on 1P Side.

Next, it is judged whether or not the OK flag (P2) is 1 (Step S39).

When the OK flag (P2) is 1, i.e., when successful, 1 point is added to the cool point of Player 2 (Step S40), and Step S41 follows. When the OK flag (P2) is not 1, i.e., when unsuccessful, the cool point remains as it is, and Step S41 follows. In Step S41, the judgment result is indicated by "O" or "X" on the button 2 of the input judgment field of the main player on 2P Side.

Next, Step S50 (indication effect) of the flow chart of FIG. 29 will be detailed with reference to the flow chart of FIG. 30. The indication effect of Step S50 is for the assist play and cooperative play.

It is judged whether or not the input button on the main player side is ON (Step S51). When the input button on the main player side is not ON, "X" mark is indicated on the button 1 (Step S52). When the input button on the main player side is ON, it is judged whether or not the button 1 has been pushed in good time, and the judgment result is indicated by "O" or "X" on the button 1 of the input judgment field (Step S53). When the judgment result is "O", the effect is indicated on the character of the main player by ☆ or others (Step S54). When the judgment result is "X", the effect indication is not made.

Next, it is judged whether or not the input button on the sub-player side is ON (Step S55). When the input button on the sub-player side is ON, it is judged whether or not the current game made is the cooperative play (Step S56).

When the current game mode is not the cooperative play, the current game mode is the assist play. In this case, only when the result of the input judgment of the sub-player is "O", "O" mark is indicated on the button 2 of the input judgment field (Step S57).

When the current game mode is cooperative play, the input judgment of the input button is made, and the result is indicated on the button by "O" or "X" (Step S58).

(Camera Action)

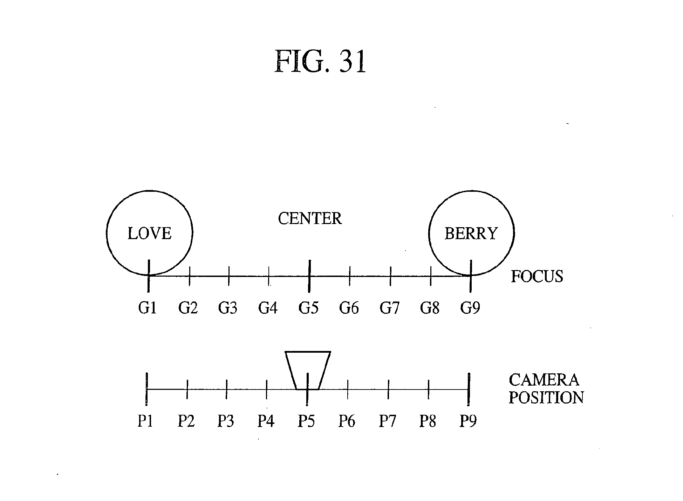

The camera action of the game of the game system according to the present embodiment will be explained with reference to FIGs. 31 to 40.

The visual point in computer graphics is also called a virtual camera and is defined by two constituent elements, i.e., a position and a direction of view.

In the description of the present embodiment, the position of view is one point in a three-dimensional virtual space defined by XYZ coordinates as the position of the virtual camera. The direction of view is one point in the three-dimensional space defined by XYZ coordinates as a focus of the virtual camera.

As illustrated in FIG. 31, the virtual camera is any one of the leftmost position (P1) to the rightmost position (P9) with the position (P5) being medium. The focus of the virtual camera is any one of the positions between the leftmost position (G1: the position of Witch Lover) and the rightmost position (G9: the position of Witch Berry) with the position (G5) being the medium.

The virtual camera has four kinds of operations, (a) a tug-of-war camera action, (b) a camera action for a bonus, (c) a one-point camera action, and (d) a chase camera action.

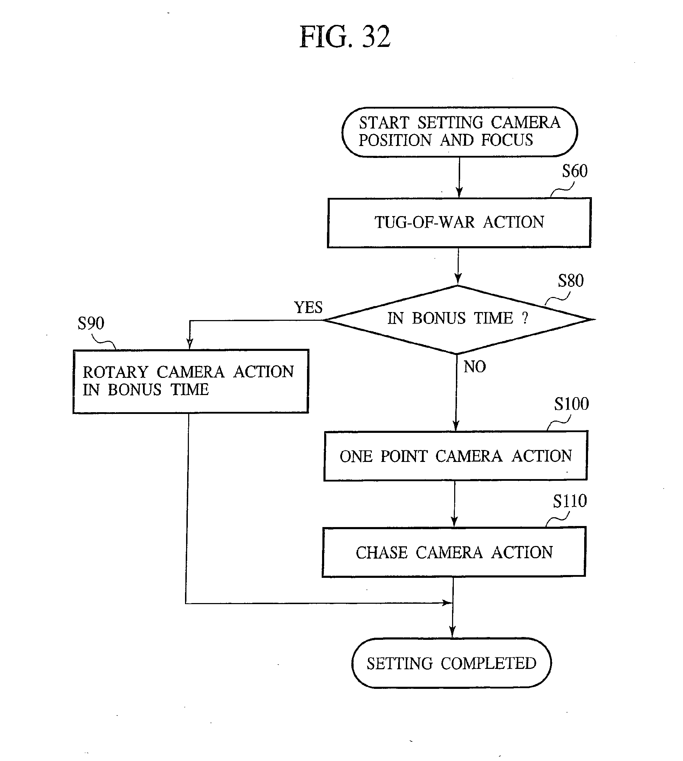

The virtual camera actions will be summarized with reference to the flow chart of FIG. 32.

The position of the virtual camera is set at the medium of the front of each stage (Position P5), and the focus is set at the medium of the depth-wise direction (Position G5). In this case, the positions of the two characters are respectively left and right of the center of the stage.

In the dance play, the tug-of-war camera action is made, depending on which side character has won (Step S60).

Then, with the virtual camera at the rightmost position (P9) or the leftmost position (P1), it is judged whether or not the bonus stage being a bonus time in which the virtual camera is positioned further out based on a result of the play is played (Step S80).

In Step S80, when the bonus time is judged, the virtual camera moves along a track which rises helically around each character upward from below with the focus so set that all the periphery of the character is picture (Step S90).

In Step S80, when the bonus time is not judged, with the virtual camera positioned not at the rightmost position P9 or the leftmost position P1 but between Position P2 and Position P8, the one-point camera action is made (Step S100).

In the one-point camera action, when tie results of the play continue, the position of the camera is shifted in accordance with the time table of the dance music upward to downward to any one of the upper position (head position) the middle (waist position) and lower position (foot position) the character (head position).

Then, in accordance with the dances of the two characters, i.e., left and right and to and fro and diagonal motions on the stage, the focus of the virtual camera is shifted in accordance with movement quantities of the respective characters to thereby make the chase camera action, in which the respective characters are chased (Step S110).

Then, the chase camera action in Step S110 is completed, or the rotary camera action in the bonus stage in Step S90 is completed, the virtual camera is set at the medium position (P5), which is the initial setting of the virtual camera, and the position of the focus is set at the medium position (G5). Thus, the processing is completed.

(Tug-of-War Camera Action)

At the start of the game, the virtual camera is at the medium position (P5), and focus is at the medium position (G5).

When the character on the left side wins, the virtual camera is shifted from the medium position P5 to Position P4, and the focus is shifted from Position G5 to Position G4. When the character on the left side wins again, the virtual camera is shifted to Position P3, and the focus is shifted to Position G3. At this time, oppositely, when the character on the right side wins, the virtual camera at Position G4 is shifted to Position P5, and the focus at Position G4 is shifted to Position G5. When the characters on the left and the right sides tie each other, the virtual camera and the focus remain at the current position.

As described above, based on which of the characters on the left and the right sides wins, the position of the virtual camera and the position of the focus are shifted toward the side of the winning character to form a camera image in close up on the winning character. This is the operation like the tug-of-war in which the virtual camera and the focus are pulled between the left and the right characters.

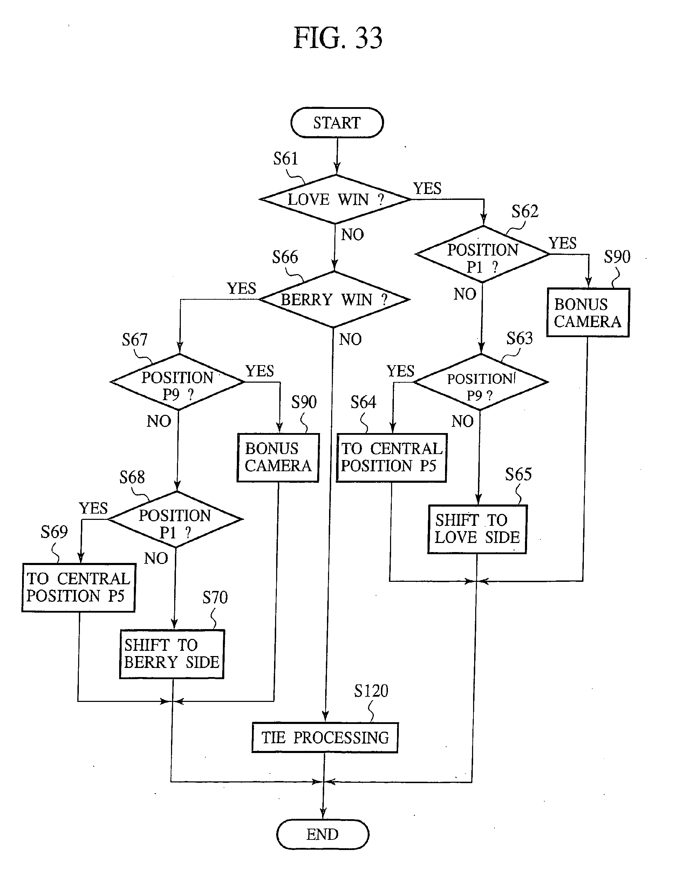

The tug-of-war camera action will be explained with reference to the flow chart of FIG. 33.

When the dance battle is made, first it is judged whether or not Witch Love on the left side has won (Step S61).

When Witch Love has won, it is judged whether or not the virtual camera is at the leftmost position P1 (Step S62). When the virtual camera is at the leftmost position P1, the virtual camera cannot be shifted any further left. The bonus camera action takes place (Step S90).

In Step S62, when it is judged that the virtual camera is not at position P1, then it is judged whether or not the virtual camera is at the rightmost position P9 (Step S63). When the virtual camera is at the rightmost position P9, the virtual camera is returned to the initial medium position P5 (Step S64).

In Step S63, when the virtual camera is not at Position P9, the virtual camera is judged to be at a position between Position P2 and Position P8 and is shifted toward Love by 1 position (Step S65).

In Step S61, when it is judged that Love lost, it is judged whether or not Berry has won (Step S66). When Berry has won, it is judged whether or not the virtual camera is at the rightmost position P9 (Step S67). When it is judged that the virtual camera is at the rightmost position P9, the virtual camera cannot be shifted any further right, and the bonus camera action takes place (Step S90).

In Step S67, when it is judged that the virtual camera is not at the position P9, then it is judged whether or not the virtual camera is at the leftmost position P1 (Step S68). When it is judged that the virtual camera is at the leftmost position P1, the virtual camera is returned to the initial medium position P5 (Step S69).

In Step S68, when it is judged that the virtual camera is not at the leftmost position P1, the virtual camera is judged to be at a position between the position P2 and the position P8, and the virtual camera is shifted toward the Berry side by 1 position.

In Step S56, when it is not judged that Berry has won, the tie processing is made (Step S120). Love is not judged to have won, and Berry is not judged either to have won, and the competition in the dance battle is even. In the present embodiment, however, the competition is not judged to tie, and the characteristic tie processing reflecting the above-described lucky colors obtained, etc. is made.

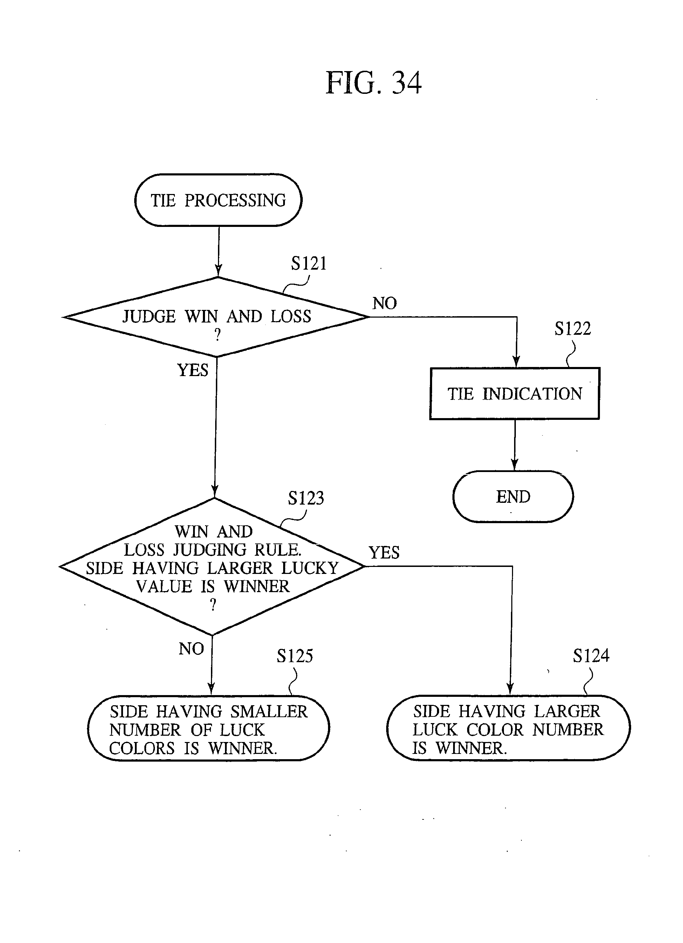

The tie processing (Step S120) will be detailed with reference to the flow chart of FIG. 34.

First, it is decided whether or not the win is judged (Step S121). A random number is generated by the CPU 101 of the game apparatus 1 to decide based on the random numbers whether or not the win is judged. For example, when the random number is even, the win and loss judgment is made, and the win and loss judgment is not made when the random number is odd. The probability of making the win and loss judgment may be higher or lower than the probability of not making the win and loss judgment or may be equal to the latter.

In Step S121, when it is decided that the win and loss judgment is not made, the indication of a tie to the effect that Love and Berry tie each other is made, and the processing of FIG. 33 is completed.

In Step S121, when it is decided that the win and loss judgment is made, the rules for judging the win are decided in Step S123. In the win and loss judgment, the win is decided based on a number of the lucky colors obtained. In Step S123, however, it is decided based on the random number generated by the CPU 101 of the game apparatus 1 whether or not the side obtaining a larger number of the lucky colors is the winner.

In Step S123, when the win and loss judging rule that the side obtaining a larger number of the luck colors is the winner is decided, it is decided in Step S124 which of Love and Berry has won, based on the win and loss judging rule that the side obtaining a larger number of the luck colors is the winner. "Lucky" is indicated on the character of the winning game player.

In Step S123, when the win and loss judging rule that the side obtaining a smaller number of the lucky colors is the winner is decided, it is decided in Step S125 which of Love and Berry has won, based on the win and loss judging rule that the side obtaining a smaller number of the luck colors is the winner. "Lucky" is indicated on the character of the winning game player.

It is possible that Step S124 and Step S125 are followed by Step S61 in FIG. 33, and here the virtual camera is shifted in accordance with the win and loss.

In the present embodiment, the probability of judging the side obtaining a larger number of the lucky colors to be the winner is higher than the probability of judging the side obtaining a smaller number of the lucky colors to be the winner. With the points of both sides in the dance battle being equal to each other, usually the side obtaining a larger number of the lucky colors is the winner, but often the side obtaining a smaller number of the lucky colors is the winner. This makes the game players amusing in that they have obtained a small number of the lucky colors but may luckily win.

(Bonus Camera Action)

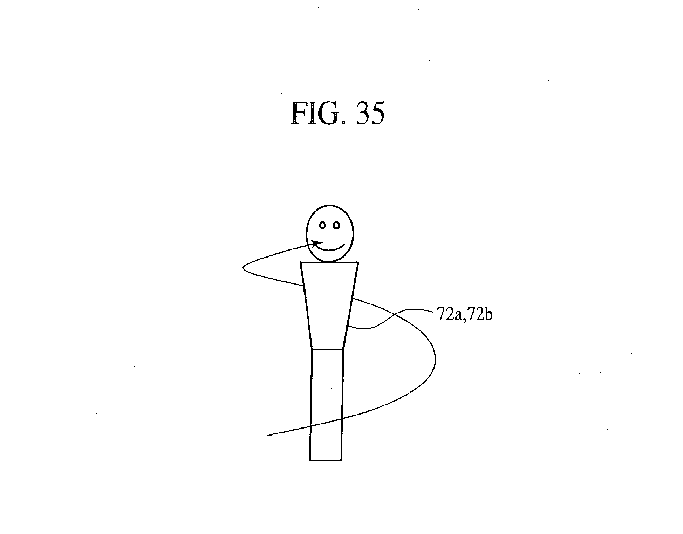

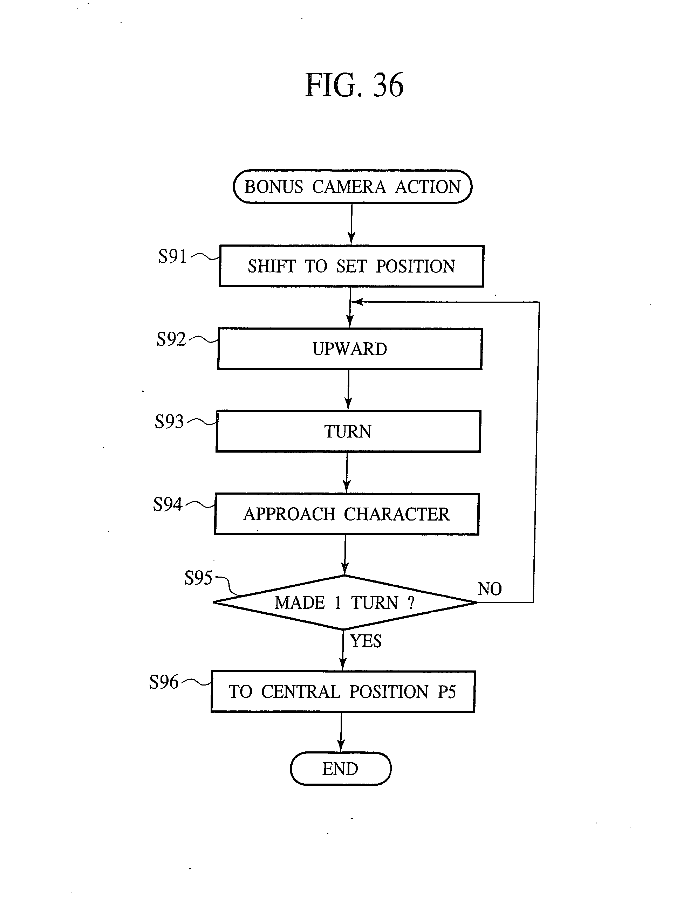

The bonus camera action will be explained with reference to FIGs. 35 and 36.

The bonus camera action takes place in the tug-of-war camera action when the virtual camera is at the left most position P1, and Love on the left side has won, or when the virtual camera is at the rightmost position P9, and Berry on the right side has won (Step S90).

FIG. 35 illustrates the shift of the positions of the virtual camera in the bonus camera action. The position of the virtual camera is shifted upwards from below helically around the character 72a, 72b. The focus is set always on the character 72a, 72b irrespective of the position of the virtual camera.

In the bonus camera action with the virtual camera at the leftmost position P1, the virtual camera is turned clock-wise upward from below helically around the character 72a. In the bonus camera action with the virtual camera at the rightmost position P9, the virtual camera is turned counter-clockwise upward from below helically around the character 72b.

After the bonus camera action, the virtual camera is returned to the medium position P5, and the focus is also returned to the medium position G5.

FIG. 36 is the flow chart of the bonus camera action.

In the tug-of-war camera action, the bonus camera action takes place in Step S67 or Step S62 of the flow chart of FIG. 33.

First, the virtual camera is shifted to a lower position in front of the character 72a, 72b to be pictured, and the focus is moved to a position where the waist of the character 72a, 72b to be pictured is looked up (Step S91).

Then, the Y coordinate of the position of the virtual camera is shifted upward (Step S92), and the position of the virtual camera is turned outward (Step S93). Next, the position of the virtual camera is shifted so that the trace of the turn circle approaches the character 72a, 72b to be pictured (Step S94).

Then, it is judged whether or not the position of the virtual camera has made one turn around the character 72a, 72b to be pictured (Step S95). When the position of the virtual camera has not made one turn around the character 72a, 72b to be pictured, the step is returned to Step S92. Then, the processing of Step S92 to Step S94 including Step S94 is repeated. When the position of the virtual camera has made one turn around the character 72a, 72b to be pictured, the virtual camera is returned to the initial medium position P5 (Step S96), and the bonus camera action is completed.

(One Point Camera Action)

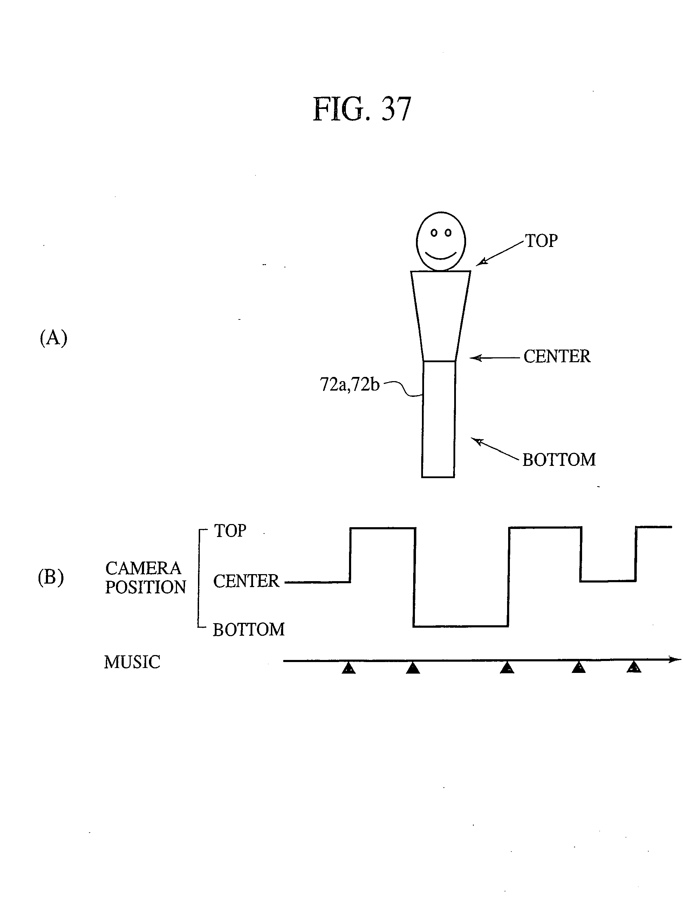

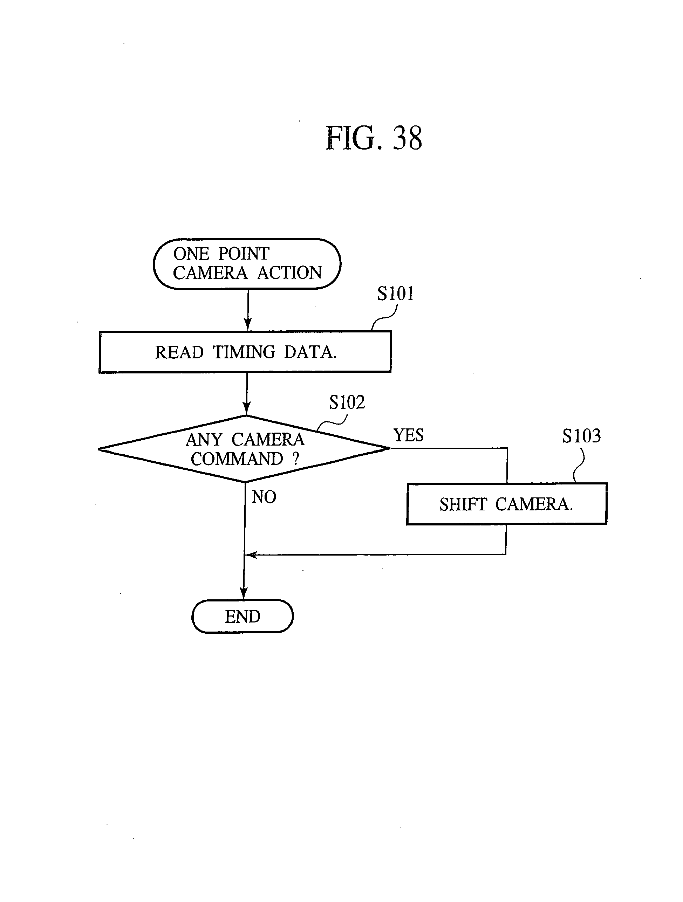

The one point camera action will be explained with reference to FIGs. 37 and 38.

In the tug-of-war camera action, when the virtual camera is judged to be at a position between Position P2 and Position P8 and not to be in the bonus time, the one point camera action takes place (Step S100).

FIG. 37 illustrates the shift of the position of the virtual camera in the one point camera action.

In the one point camera action, in the dance battle the position of the virtual camera is set at an upper position (head position), a middle position (waist position) and a lower position (foot position) of the character 72a, 72b, and in accordance with music, the position of the virtual camera is shifted suitably among the upper position (head position), the middle position (waist position) and the lower position (foot position).

As illustrated in FIG. 37(B), the music played on the dance battle image contains timing data which commands shift positions (indicated by the ▲ marks) of the one point camera action at a prescribed interval. The timing data is detected, and at the shift positions (▲) the position of the virtual camera is shifted.

As exemplified in FIG. 37(B), at the shift positions (▲), the position of the virtual camera is shifted from the middle position (waist position) sequentially to the upper position (head position), the lower position (foot position), the upper position (head position), the middle position (waist position) and the upper position (head position), ...

Thus, in accordance with the music, the position of the virtual camera is shifted among the upper position, the middle position and the lower position, whereby even when the virtual camera is not shifted horizontally in the tug-of-war camera action, in which both sides tie each other, the position of the virtual camera is shifted to thereby make the game image having dynamic changes which always amuse the game players.

FIG. 38 is the flow chart of the one point camera action.

The timing data set in the music played in the game is read (Step S101). It is judged whether or not the timing contains the command of the position shift of the virtual camera (Step S102). When the command of the position shift is contained, the position of the virtual camera is shifted (Step S103). In Step S102, when it is judged that the command of the position shift of the virtual camera is not contained, the position of the virtual camera is retained.

(Chase Camera Action)

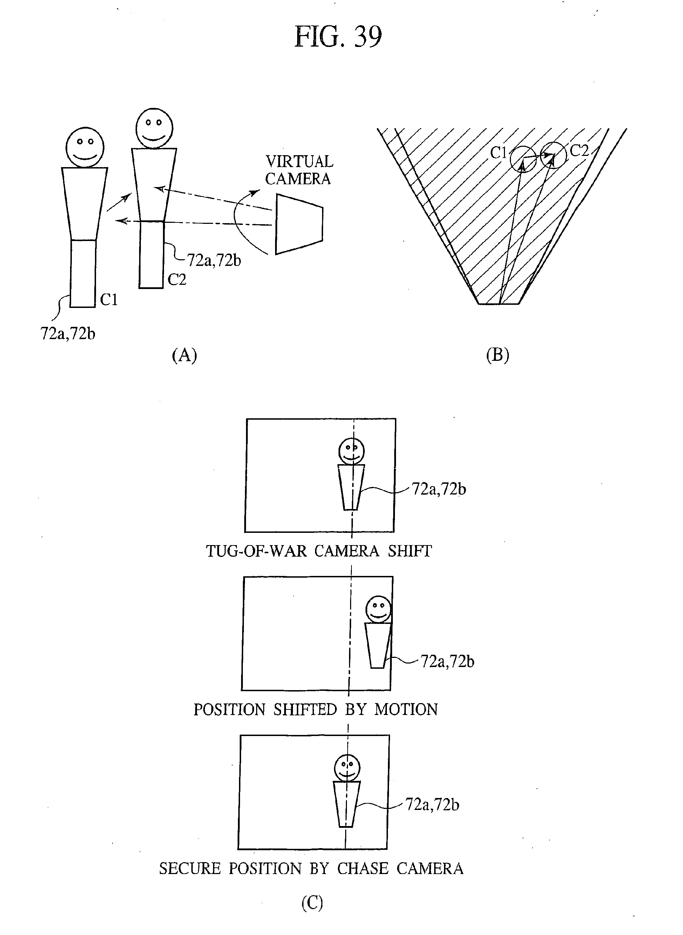

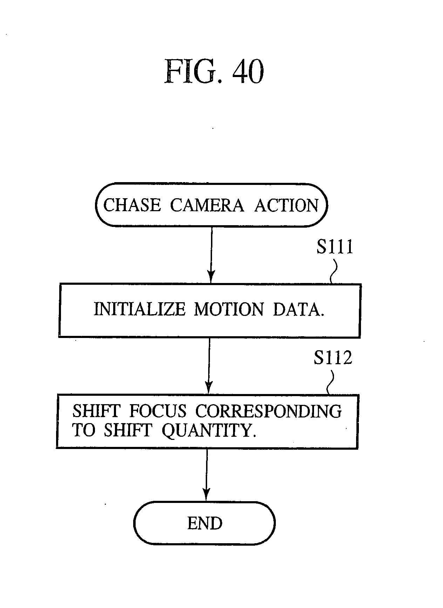

The chase camera action will be explained with reference to FIGs. 39 and FIG. 40.

In the dance image, the respective characters are dancing and do not have always the same positions. The respective characters are moving backward and forward, left and right and diagonally. In this state is made the chase camera action in which the focus of the virtual camera is shifted to chase the movements of the characters (Step S110).

FIG. 39 illustrates the shift of the focus of the virtual camera in the chase camera action.

As illustrated in FIG. 39(A), when the characters 72a, 72b move from Position C1 to Position C2 while dancing, the position of the virtual camera is not changed, but the focus of the virtual camera is shifted, following the movements of the characters 72a, 72b.

As illustrated in the plan view of FIG. 39(B), when the focus of the virtual camera is shifted, following the movement of the characters 72a, 72b, the visual field of the virtual camera is accordingly shifted, and the relative position between the characters 72a, 72b in the game image is substantially constant.

FIG. 37(C) illustrates camera images formed by the chase camera action. Initially, the character is positioned right of the medium of the game image by the tug-of-war camera action (the uppermost drawing of FIG. 37(C)). When the character dances and moves, the position in the game image is shifted (the middle drawing of FIG. 37(C)). However, the focus of the virtual camera' is shifted by the chase camera action, whereby the position of the character in the game image is returned to the initial position (the lowermost drawing of FIG. 37(C)).

In the chase camera action, with the quantities in the X-direction (length-wise) and the Z-direction (depth-wise) of the initial motion data set at zero, the focus of the virtual camera is shifted corresponding to movement quantities of motions of the dance of the characters 7a, 72b without being fixed to the 9 focus points G1 - G9. Thus, to the game players, the tug-of-war camera action can appear to be being made.

In the chase camera action, in shifting the position of the focus of the virtual camera, simply following the motions of the characters, when the movements of the characters are active, the display range of the virtual camera is much vibrated. Accordingly, the shift of the focus of the virtual camera is corrected to be less than the movements of the characters, whereby even when the movements of the characters are active, the game image can be stable.

FIG. 38 is the flow chart of the chase camera action.

At the start of the dance, the motion shift value is initialized to be at the middle of the stage (Stage S111). The two characters are displayed substantially at the middle position of the game image. When the motions of the characters are shifted left and right in accordance with the advance of the dance, the focus of the virtual camera is shifted corresponding to the shift quantities.

(Modified Embodiments)

The present invention is not limited to the above-described embodiments and can cover other various modifications.

For example, in the above-described embodiments, the game cards with bar codes incorporated are used. However, as long as codes can be read, the code can be incorporated by other means. For example, cards with OCR letters incorporated, magnetic card, IC card, etc. may be used.

In the above-described embodiments, game players compete by operating characters, and the win and loss are decided. However, in the game for little girls, deciding win and loss much stresses especially girls who have lost. Game players may not compete with each other. If game players compete with each other, they compete always with computers, and the game develops in favor of the game player to thereby decrease the stress on little girls.

In the above-described embodiments, game players compete with each other or with computers in the dance but may compete in other kinds of games.

The above-described embodiments are explained by means of the so-called arcade game apparatus installed in game centers. However, the present invention is applicable to domestic game apparatuses, and game systems using personal computers, portable telephones, etc.

INDUSTRIAL APPLICABILITY

The present invention is applicable to various card game apparatuses, and is applicable not only commercial game apparatuses but also domestic game apparatuses and portable game apparatuses having bar code readers.

**Claims**

1. A game system comprising:

a code reading means for reading in a code recorded in a card;
a character generating means for generating a character, based on a combination of a plurality of codes read in by the reading means; and
a character evaluating means for evaluating the generated character,
the game system further comprising a memory means for storing at least base character data which are a base for the generated character, first part data for forming a part of the character, which corresponds to a first code, and a plurality of second part data for forming other parts of the character, which correspond to a second code, the character generating means including:

a base character image generating means for reading out the base character data and generating a base character image;
a first part changing means which, when the first code is read in, reads out the first part data corresponding to the first code from the memory means and changes a part of the base character data by the read out first part data;
a second part changing means which, when the second code is read in, selects and reads out, out of said plurality of second part data, one second part data corresponding to the second code and changes another part of the base character image by the second part data;
a third part changing means which, when the second code is read again, selects and reads out one second part data out of said plurality of second part data other than the second part data selected by the second

**29**

part changing means, and changes another part of the base character image by the selected second part data; and

a character image generating means for generating a character image, based on the character data changed by at least any one of the first part changing means, the second part changing means and the third part changing means.

2. A game system comprising:

an operation means operated by a game player;
a display means for displaying a game image;
a sound outputting means for outputting game sounds;
an evaluation means for evaluating an operation input into the operation means; and
a control means for controlling the game,
the control means including:

a first means for displaying an image on the game image by the display means to indicate that the operation means should be operated;
a second means for outputting a game sound by the sound outputting means to indicate that the operation means should be operated concurrently with the display of the image; and
a third means for outputting an auxiliary game sound by the sound outputting means to assist the indication that the operation means should be operated, before a prescribed period of time prior to the display of the image, and
the evaluation means evaluating the operation input into the operation means, based on a timing of the operation input into the operation means and a timing of generating the game sound by the second means.

3. A game system comprising:

a first operation means operated by a first game player;
a second operation means operated by a second game player;
a display means for displaying a game image;
a sound outputting means for outputting a game sound; and
an evaluation means for evaluating an operation input into the operation means,
a control means including:

at least one of a first means for outputting an image on the game image by the display means to indicate that the first operation means should be operated, and a second means for outputting a game sound by the sound outputting means to indicate that the first operation means should be operated,
the evaluation means evaluating the operation input into the first operation means, based on whether or not at least one of a timing of the operation input into the first operation means and a timing of the operation input into the second operation means agrees with an output timing of the first means or the second means.

4. A game system according to claim 3, wherein
the first means or the second means of the control means indicates that the first operation means should be operated a prescribed number of times, and
the evaluation means evaluates the operation input of the first operation means, based on whether or not of the first operation means is operated said prescribed number of times, whether or not the second operation means is operated said prescribed number of times and whether or not a total value of the number of times the first operation means and the second operation means are operated is said prescribed number of times.

5. A game system comprising:

a code reading means for reading in a code recorded in a card;
a character generating means for generating a character, based on a combination of a plurality of codes read in by the reading means; and
a game control means for controlling a game,
the card having a visible mark in addition to the code,
the game system further comprising a memory means for storing base character data which are a base for the generated character, part data forming a part of the character, corresponding to the code, and a mark provided on the card,
the character generating means including:

a specific mark indicating means for indicating a specific mark;
a base character image generating means which reads out the base character data and generates a base character image;
a part changing means which, when the code is read in, reads the part data corresponding to the code from the memory means and changes a part of the base character data by the read part data;
a character image generating means for generating a character image, based on the character data changed by the part changing mean; and
a specific mark counting means for counting the specific marks on the cards which have been read in to generate the character image,
the image control means controlling the game, based on a counted result of the specific mark counted by the specific mark counting means.

6. A game system comprising:

a game control means for controlling a competition game in which a first character and a second character compete in a three-dimensional virtual space;
a display means for picturing the three-dimensional virtual space with a virtual camera and displaying the three-dimensional space on a two-dimensional display monitor; and
a camera control means for controlling a position and a focus of the virtual camera,
the camera control means including:

a first means for setting the position and focus of the virtual camera so that the first character and the second character are contained in a two-dimensional display monitor; and
a second means for changing the position and the focus of the virtual camera based on a competition result of the competition game so that the winning first character or the winning second character is moved towards the middle of the two-dimensional display monitor.

7. A game system according to claim 6, wherein
the camera control means includes
a third means for controlling the position and the focus of the virtual camera to produce the surroundings of the winning first character or the winning second character when the movement of the winning first character or the winning second character in the two-dimensional display monitor has reached a prescribed limit, based on a competition result of the competition game.

8. A game system according to claim 6, wherein
the camera control means includes
a fourth means which, when a position of the first character or the second character in the two-dimensional display monitor does not change for a prescribed period of time, controls the position and the focus of the virtual camera so that the first character or the second character is moved in the direction opposite to the direction of movement of the character by the second means.

9. A game system comprising:

a code reading means for reading in a bar code recorded in a card;
a character generating means for generating a character, based on a combination of a plurality bar codes read in by the reading means; and
a character evaluating means for evaluating the generated character,
the game system further comprising a memory means for storing at least base character data which are a base for the generated character, and part data for forming a part of the character, which corresponds to the bar code,
the character generating means including:

a base character image generating means for reading out the base character data and generating a base character image;
a part changing means which, when the bar code is read in, reads out the part data corresponding to the bar code from the memory means and changes a part of the base character data by the read out part data; and

a character image generating means for generating a character image, based on the character data changed by the part changing means.

10. A program for a game system comprising an operation means operated by a game player; a display means for displaying a game image; a sound outputting means for outputting game sounds; an evaluation means for evaluating an operation input into the operation means; and a control means for controlling the game, the program comprising the steps of:

making the control means command the display means to display an image on the game image to indicate that the operation means should be operated;

making the control means command the sound outputting means to output a game sound to indicate that the operation means should be operated concurrently with the display of the image;

making the control means command the sound outputting means to output an auxiliary game sound to assist the indication that the operation means should be operated before a prescribed period of time prior to the display of the image; and

making the evaluation means evaluate the operation input into the operation means, based on a timing of the operation input into the operation means and a timing of generating the game sound by the operation means.

11. A game program for a game system comprising a first operation means operated by a first game player; a second operation means operated by a second game player; a display means for displaying a game image; a sound outputting means for outputting a game sound; and an evaluation means for evaluating an operation input into the operation means, the program comprising the steps of:

making the control means command the display means to display an image on the game image to indicate that the first operation means should be operated, or the sound generating means to output a game sound to indicate that the first operation means should be operated; and

making the evaluation means evaluate the operation input into the first operation means, based on whether or not at least one of a timing of the operation input into the first operation means and a timing of the operation input into the second operation means agrees with an output timing of the first means or the second means.

# FIG. 1

(A)                                      (B)

# FIG. 2

(A)

(C)

(B)

# FIG. 3

(A)

(B)

# FIG. 4

**FIG. 5**

Block diagram:

- SYSTEM MEMORY (102) ↔ BUS ARBITER (106)
- BUS ARBITER (106) → IMAGE GENERATING MEANS (117) containing CPU (101) and RENDERING PROCESSOR (107)
- RENDERING PROCESSOR (107) → CRT (5)
- IMAGE GENERATING MEANS (117) ↔ GRAPHIC MEMORY (108)
- PROGRAM DATA MEMORY OR MEMORY MEDIA (103)
- BOOT ROM (104)
- COIN SWITCH OPERATION INPUT SWITCH (49)
- CARD READER (3)
- BACKUP MEMORY (116)
- SOUND PROCESSOR (109) → SPEAKER (13)
- SOUND PROCESSOR (109) ↔ SOUND MEMORY (110)
- COMMUNICATION I/F (111) → MODEM (114)
- CARD DISPENSER (8)
- (100)

EP 1 749 558 A1

# FIG. 6

(A)

(B)

# FIG. 8

42    43    40

Footwear Card    001

41    F

44a

45

46

Crossed ribbons and diamonds look
super flashy.
Match them with a nature style.

CROSS RIBBON

47

# FIG. 9

Special Item Card    001

Miracle card for hair color change. Which color is the best match for your look?

MIRACLE HAIR COLOR

(A)

Special Item Card    002

Miracle card for skin tone change. Going for gal style look or girlie look?

MIRACLE FOUNDATION

(B)

# FIG. 10

(A)

[HAIR & MAKEUP CARD]

| CODE | MODEL DATA NAME | TEXTURE DATA NAME | FACE TEXTURE NAME | NAME |
|---|---|---|---|---|
| 001 | N_Hr001.Bipol | N_Hr001 | N_sFa001 | PRINCESS HAIR |
| 002 | N_Hr004.Solid | N_Hr004 | N_sFa004 | TOMBOY HAIR |
| 003 | J_Hr011.Solid | J_Hr011 | N_sFa011 | GIRLIE CURLY LONG HAIR |
| | | | | |
| | | | | |
| | | | | |
| | | | | |
| | | | | |
| | | | | |

(B)

[DRESS UP CARD]

| CODE | MODEL DATA NAME | TEXTURE DATA NAME | ACCESSO-RIES | NAME |
|---|---|---|---|---|
| 001 | G_FB001F.Bipol | G_FB001 | 1 | ELEGANT DRESS |
| 002 | M_FB002F.Bipol | M_FB002 | 2 | SPARKLY PEARL DRESS |
| 003 | M_FB003F.Bipol | M_FB003 | 3 | SKY BLUE DRESS |
| | | | | |
| | | | | |
| | | | | |
| | | | | |
| | | | | |
| | | | | |

# FIG. 11

[FOOTWARE CARD]

| CODE | MODEL DATA NAME | TEXTURE DATA NAME | COLOR NAME | NAME |
|---|---|---|---|---|
| 001 | J_FS001 | J_FS001 | BLUE | JEWELRY SANDAL HEELS |
| 002 | J_FS002 | J_FS002 | RED | PINK RIBBON HEELS |
| 003 | J_SS001 | J_SS001 | RED | LACE-UP BOOTS |
| | | | | |
| | | | | |
| | | | | |
| | | | | |
| | | | | |
| | | | | |

# FIG. 12

## (A)

[OSHARE MAJO TABLE FOR LOVE]

| PART | DETAILS | CONTENTS |
|---|---|---|
| HEAD (HAIR & MAKEUP) | MODEL DATA NAME | N_Hr001.Bipol |
| | TEXTURE DATA NAME | N_Hr001 |
| | | N_sFa001 |
| TRUNK (DRESS UP) | MODEL DATA NAME | G_FB001F.Bipol |
| | TEXTURE DATA NAME | G_FB001 |
| | | |
| FEET (FOOTWEAR) | MODEL DATA NAME | J_FS001 |
| | TEXTURE DATA NAME | J_FS001 |
| | | |

## (B)

[OSHARE MAJO TABLE FOR BERRY]

| PART | DETAILS | CONTENTS |
|---|---|---|
| HEAD (HAIR & MAKEUP) | MODEL DATA NAME | J_Hr004.Solid |
| | TEXTURE DATA NAME | N_Hr004 |
| | | N_sFa004 |
| TRUNK (DRESS UP) | MODEL DATA NAME | M_FB003F.Bipol |
| | TEXTURE DATA NAME | M_FB003 |
| | | |
| FEET (FOOTWEAR) | MODEL DATA NAME | J_SS001 |
| | TEXTURE DATA NAME | J_SS001 |
| | | |

# FIG. 13

[STREET COURT]

(A)

[BALL]

(B)

[IDOL STAGE]

(C)

# FIG. 14

(A)

Please take up card.

P01 INSERT COINS AND EMIT 1 CARD.

(B)

Which do you play with, Love or Berry ?

Play with Love

Play with Berry

10

P02 SELECT LOVE OR BERRY.

CHARACTER (LOVE) SELECTED

(B')

(C)

P03 GAME START.
BERRY CALLS LOVE
GETTING UP LATE.

"ARE YOU STILL SLEEPING?"

(D)

P04 "WE HAVE PROMISED TO GO TO
THE DANCE PARTY TODAY?"

"WE'LL GO TO THE CASTLE.
DRESS UP DECENTLY.
I'LL NEVER LOSE TODAY."

(E)

P05 "TERRIBLE!  ALL HELP ME
DRESS UP!"

USE YOUR "OSHARE MAJO
CARDS".

(F)

P06 SCAN DRESS UP CARD.
TRANSFORM FROM PAJAMAS
BY MAGIC.
LOVE DOES NOT LIKE IT.
"IT'S A DANCE PARTY,
YOU KNOW!"

(G)

P07 SCAN A SECOND
DRESS UP CARD.

"YES,  MAYBE GOOD."

# FIG. 15

(A) P08 SCAN HAIR & MAKEUP CARD,

"OH, MADE IT!"

WARP THE DANCE HALL!

(B) P09 AT THE DANCE HALL.
BERRY IS WAITING.

"LOVE, YOU ARE LATE!"

(C) P10 MUSIC STARTS,
AND BATTLE STARTS.
THEY START TO DANCE WITH
RESPECTIVE PARTNERS.

(D) P11 CONTINUOUSLY FAILS TO
PUSH INPUT BUTTON.

(E) P12 LOVE'S DRESS UP MAGIC
DISAPPEARS, AND LOVE
RETURNS TO PAJAMAS.

"OH, NO!"

(F) P13 LOVE DANCES IN PAJAMAS
UNTIL A SUCCESSFUL INPUT.

"EMBARRASSING!"

LOVE'S SMARTNESS DEGREES
DOES NOT INCREASE.

(G) P14 MEANWHILE, BERRY'S
SMARTNESS DEGREE
BECOMES MAXIMUM.
"FU, FU, I'VE WON!"
WHEN BERRY WINS,
THE NEXT STAGE FOLLOWS.

# FIG. 16

FIG. 17

(A)

(B)

# FIG. 18

(A) HOME IMAGE

74    70

73a — LOVE ???

BERRY 250 — 73b

75

H
D
F
S

72b

71

72a

SCAN DRESS UP CARD.
WHEN DRESSED UP, PRESS BUTTON.

76

SCAN HAIR &
MAKE-UP
CARD.

RETURN
AFTER 4
SECONDS.

SCAN
CARD.

RETURN
AFTER 4
SECONDS.

RETURN
AFTER 4
SECONDS.

SCAN
CARD.

SCAN
FOOTWEAR
CARD.

~77

H H H H
D
F
S

SCAN
DRESS UP
CARD.

H
D F F F
F
S

(B) HAIR & MAKEUP IMAGE

SCAN
CARD.

(D) FOOTWEAR IMAGE

79

H
D D D
F
S

~78

(C) DRESS UP IMAGE

FIG. 19

```
                    ( START )
                        |
   GENERATE AND DISPLAY BASE CHARACTER IMAGE. }~S01
                        |
        START TIMER COUNT. }~S02
                        |
                        |
                      S03
  FIRST CODE    / WHICH \      SECOND CODE
  ┌──────────< CARD HAS BEEN READ >──────────┐
  |            \      ?      /                 |
  |                                            |
  |                                      / SCAN \    S05
  |                         0 TIME     / MEMORY HOW \
  |                        ┌─────────< MANY TIMES SECOND >
  |                        |          \ CODE HAS BEEN /
  |                        |           \   READ    /
  |                        |            \    ?    /
  |              S04       |      S06         | n TIME    S07
  |          ┌────────────────────────┐  ┌────────────────────┐
  | CHANGE              | RECORD SECOND  | RECORD SECOND
  | CORRESPONDING       | CODE HAVING BEEN| CODE HAVING BEEN
  | PART OF BASE        | READ IN MEMORY | READ IN MEMORY
  | CHARACTER DATA      | ONCE.          | n+1 TIMES
  | BY FIRST PART DATA  └────────────────┘└────────────────────┘
  | CORRESPONDING TO        |                 |         S08
  | FIRST CODE.             |        S09  YES / n=MAX ? /
  |                         |      ┌────────<           >
  |                         |      | RETURN TO\         /
  |                         |      | 0 TIME    NO   S10
  |                         |      └──────┐     |
  |                         |             |     |
  |         SELECT OUT OF A PLURALITY OF PART DATA ONE
  |         PART DATA CORRESPONDING TO READ-IN TIMES
  |         AND CHANGE A PART OF BASE CHARACTER
  |         DATA CORRESPONDING TO SELECTED PART DATA.
  |                         |
  └──────GENERATE CHARACTER IMAGE, BASED ON CHANGED PART DATA. }~S11
                        |
         NO    / IS TIMER COUNT PRESCRIBED VALUE ? \ ~S12
  ┌──────────<                                      >
  |            \                                    /
  |                      YES |
  |       RETURN TO 0    TIMES OF READING IN SECOND }~S13
  |       CODE IN MEMORY.
  |                        |
  |       COMPUTE CHARACTER EVALUATION VALUE, }~S14
  |       BASED ON PART DATA SET ON CHARACTER.
  |                        |
  |                    ( END )
```

# FIG. 20

○ HAIR & MAKEUP CARD

HAIR & MAKEUP CARD
GIRLY HAIR H
HAIRDO WHICH WAS VERY POPULAR AMONG AMERICAN GIRLS IN THE 1960'S.
VERY COMPATIBLE WITH CHIC ONE-PIECE DRESS.
—20

001 002 003 004 005 006
007 008 009 010 011 012

○ DRESS UP CARD

a
c
DRESSING-UP CARD D
DENIM & LONG T-SHIRT b
g
d
e
f
—30

B
SUIT BERRY BETTER
SUIT LOVE BETTER
L

001 002 003 004 005 006
007 008 009 010 011 012
013 014 015 016 017 018
019 020 021 022 023 024

CONTENTS OF OSHARE MAJO CARD

a KINDS OF CARDS
b MARKS INDICATING KINDS
c NAME OF THIS CARD
d DESIGN OF DRESSING
e FACE AND DIALOGUE OF LOVE
f FACE AND DIALOGUE OF BERRY
g BAR CODE

○ FOOTWARE CARD

FOOT WARE CARD
LONG BOOTS F
RECENTLY POPULAR LONG BOOTS. 1 PAIR IS NECESSARY
POINT IS TO COMBINE WITH MINISKIRT. LEGS LOOK SLENDER.
—40

001 002 003 004 005 006
007 008 009 010 011 012

DRESS UP POWER = DECIDE BASIC POINT IN GAME, BASED ON DRESS UP POWER VALUE. DRESS UP IN GOOD SENSE SUITABLE FOR A DANCE SITE, AND GAME FAVORABLY DEVELOPS.

# FIG. 21

(A)

(B)

# FIG. 22

31    32    33

Dress Up Card    001-04A

LOVELY STRAWBERRY — 37a

LUCKY ☆ COLOR ○ ● — 131

30

35

34a

Osharemajo Love & Berry

38a

26

Strawberry ribbon is super cute. Using bold colors
is the key to standing out and turning heads.

LOVELY STRAWBERRY

37b

# FIG. 23

41    42    43

Footwear Card    001-04A

PLATFORM PINK SNEAKERS ———47a

LUCKY ☆COLOR ○ ———141

F

45

44a

Osharemajo Love & Berry

40

48a

Loose socks and platform sneakers are the best combination. Match the color to make your legs look longer.

46

ATUZOKO PINK SNEAKER

47b

# FIG. 24

**(A)**

Special Item Card — 002-04A

MAGICAL HAIR COLOR

LUCKY ☆ COLOR ○●○●

Magical card for hair color change.
Which color world do your pick for your style?

MAGICAL HAIR COLOR

Osharemajo Love & Berry

**(B)**

Special Item Card — 004-04A

MAGICAL TIME PLUS

LUCKY ☆ COLOR ●

This magical card extendeds the dress up time.
Take time to finish up your look and get point. ♡

MAGICAL TIME PLUS

Osharemajo Love & Berry

# FIG. 25

LET'S GO TO STREET COURT ! — 161

TODAY'S LUCK☆COLOR IS OO ! — 162

(A)

DRESS UP POWER

**237**◎ — 163

LUCKY X — 164

(B)

# FIG. 26

# FIG. 27

(A)

(B)

# FIG. 28

(A) PUSH INDICATION

〈CONTINUOUSLY 5 TIMES〉  〈CONTINUOUSLY 3 TIMES〉

D1 D2 D3 D4 D5          D1 D2 D3

(B) BUTTON MECHANISM OK RANGE

FIG. 29

BUTTON INPUT JUDGMENT

S20 — OK_FLAG 0

S22

ALMOST IN OK RANGE ? — YES

NO

OK_FLAG 1P+1 — S23

S21 — 1P INPUT ? — YES

NO

S24 — 2P INPUT ? — YES

NO

S25

ALMOST IN OK RANGE ? — YES

NO

OK_FLAG 2P+1 — S26

S27

YES
ASSIST PLAY

COOPERATIVE PLAY ?
ASSIST PLAY ? COMPETITIVE PLAY ?

YES
COOPERATIVE PLAY

S28

YES

OK_FLAG 1P OR
OK_FLAG 2P IS 1
?

NO

YES
COMPETITIVE
PLAY

S36

OK_FLAG 1P IS 1 ? — YES

NO

S37

PLAYER 1
+1 POINT

S32

OK_FLAG 1P AND
OK_FLAG 2P ARE 1 ?

YES

NO

S30

PLAYER OK

PLAYER BAD

S38 — EFFECT INDICATION
1P SIDE MAIN PLAYER

PLAYER BAD

S34

PLAYER OK

PLAYER SIDE
+1 POINT

S29

S39

OK_FLAG 2P IS 1 ? — YES

NO

S40

PLAYER 2
+1 POINT

S33

PLAYER SIDE
+1 POINT

S31

S50 — EFFECT INDICATION

S41 — EFFECT INDICATION
2P SIDE MAIN PLAYER

EFFECT INDICATION — S50

S35

JUDGMENT END

EP 1 749 558 A1

60

# FIG. 30

```
                  ( INDICATE EFFECT )
                          │
                          ▼
                                          S51
        NO          ╱  IS MAIN      ╲
    ┌───────────────   PLAYER BUTTON  ╲
    │               ╲    ON ?        ╱
    │                 ╲            ╱
    │                     │ YES
    │   S52               ▼    S53
    │  ┌──────────────┐  ┌──────────────────┐
    │  │ INDICATE  ×  │  │ JUDGE  ○×.       │
    │  │ IN BUTTON 1  │  │ INDICATE  ○×     │
    │  └──────────────┘  │ IN BUTTON 1.     │
    │        │           └──────────────────┘
    │        │                   │  S54
    │        │           ┌──────────────────┐
    │        │           │ INDICATE ☆ EFFECT│
    │        │           │ ON IMAGE WHEN    │
    │        │           │ PUSHED IN OK RANGE.│
    │        │           └──────────────────┘
    │        │                   │
    └────────┴───────────────────▼
                                          S55
        NO          ╱  IS SUB-PLAYER ╲
    ┌───────────────   BUTTON ON ?   ╲
    │               ╲              ╱
    │                     │ YES
    │                     ▼        S56
    │               ╱ COOPERATIVE PLAY ╲   YES
    │              ╲       ?          ╱─────────┐
    │                ╲              ╱           │
    │                     │ NO  S57             │  S58
    │           ┌──────────────────┐  ┌──────────────────┐
    │           │ JUDGE  ○×.       │  │ JUDGE  ○×        │
    │           │ INDICATE  ○      │  │ INDICATE  ○×     │
    │           │ IN BUTTON 2      │  │ IN BUTTON 2      │
    │           │ ONLY WHEN  ○     │  └──────────────────┘
    │           │ JUDGMENT.        │           │
    │           └──────────────────┘           │
    └───────────────────▼─────────────────────┘
                        │
                  ( FINISH )
```

# FIG. 31

# FIG. 32

```
        ┌─────────────────────────┐
        │  START SETTING CAMERA   │
        │  POSITION AND FOCUS     │
        └─────────────────────────┘
                    │
                    │              S60
                    ▼
        ┌─────────────────────────┐
        │   TUG-OF-WAR ACTION     │
        └─────────────────────────┘
                    │
                    │              S80
                    ▼
              ◇─────────────◇
    YES      IN BONUS TIME ?
   ◄─────────◇─────────────◇
S90             │
                │ NO
                ▼                  S100
┌──────────────────────┐
│ ROTARY CAMERA ACTION │   ┌─────────────────────────┐
│ IN BONUS TIME        │   │ ONE POINT CAMERA ACTION │
└──────────────────────┘   └─────────────────────────┘
        │                          │
        │                          │          S110
        │                          ▼
        │              ┌─────────────────────────┐
        │              │   CHASE CAMERA ACTION   │
        │              └─────────────────────────┘
        │                          │
        └──────────────────────────┤
                                   ▼
                        ┌─────────────────────┐
                        │  SETTING COMPLETED  │
                        └─────────────────────┘
```

# FIG. 33

```
                         START
                           │
      S61                  ▼
    ┌─◇─────────────────◇─┐   YES
    │    LOVE WIN ?        │─────────────┐
    └─────────┬───────────┘              ▼       S62
              │ NO                   ┌─◇──────◇─┐   YES
      S66     ▼                      │ POSITION │────────┐   S90
    ┌─◇─────────────◇─┐  YES         │   P1 ?   │        ▼
    │   BERRY WIN ?   │───┐          └────┬─────┘    ┌────────┐
    └────────┬────────┘   │               │ NO       │ BONUS  │
             │ NO         │        S63     ▼          │ CAMERA │
    S67      ▼            │      ┌─◇──────◇─┐          └───┬────┘
  ┌─◇──────────◇─┐ YES    │  YES │ POSITION │              │
  │  POSITION    │──┐     │ ┌────│   P9 ?   │              │
  │    P9 ?      │  │     │ │    └────┬─────┘              │
  └──────┬───────┘  ▼     │ │         │ NO                 │
         │ NO    ┌──────┐ │ │  S64    ▼      S65           │
  S68    ▼       │ BONUS │ │ ▼ ┌──────────┐ ┌──────────┐   │
┌─◇──────────◇─┐ │CAMERA │ │ ┌────────┐   │ │ SHIFT TO │   │
│  POSITION    │ └───┬──┘ │ │TO CENTRAL│  │ │ LOVE SIDE│   │
│    P1 ?      │ YES │    │ │POSITION P5│  │ └────┬─────┘   │
└──────┬───────┘     │    │ └───┬──────┘   │      │         │
 S69   │ NO          │    │     │          │      │         │
┌──────────┐ S70     │    │     │          └──────┴─────────┘
│TO CENTRAL │ ▼      │    │     │
│POSITION P5│ ┌──────────┐│    │
└────┬─────┘ │ SHIFT TO  ││    │
     │       │ BERRY SIDE││    │
     │       └────┬─────┘│    │
     └────────────┤      │    │
                  ▼      ▼    ▼
              ┌────────────────┐  S120
              │ TIE PROCESSING │
              └───────┬────────┘
                      ▼
                    END
```

# FIG. 34

TIE PROCESSING

S121

JUDGE WIN AND LOSS
?

NO

YES

S122

TIE INDICATION

END

S123

WIN AND
LOSS JUDGING RULE.
SIDE HAVING LARGER LUCKY
VALUE IS WINNER
?

YES

NO

S125

SIDE HAVING SMALLER
NUMBER OF LUCK
COLORS IS WINNER.

S124

SIDE HAVING LARGER
LUCK COLOR NUMBER
IS WINNER.

FIG. 35

72a,72b

# FIG. 36

BONUS CAMERA ACTION

S91 — SHIFT TO SET POSITION

S92 — UPWARD

S93 — TURN

S94 — APPROACH CHARACTER

S95 — MADE 1 TURN ?   NO

YES

S96 — TO CENTRAL POSITION P5

END

# FIG. 37

(A)

TOP

CENTER

72a,72b

BOTTOM

(B)

CAMERA
POSITION

TOP

CENTER

BOTTOM

MUSIC

# FIG. 38

```
        ╭─────────────────╮
        │  ONE  POINT     │
        │ CAMERA  ACTION  │
        ╰─────────────────╯
                 │
                 │              S101
                 ▼
        ┌─────────────────────┐
        │  READ  TIMING DATA. │
        └─────────────────────┘
                 │
                 │         S102
                 ▼
              ╱───────╲            YES              S103
           ╱─────────────╲   ──────────────┐          
          ╱ ANY  CAMERA    ╲               │    ┌──────────────┐
          ╲  COMMAND  ?    ╱               │    │ SHIFT CAMERA.│
           ╲─────────────╱                │    └──────────────┘
              ╲───────╱                    │         │
                 │  NO                      └─────────┘
                 │         ◄──────────────────┘
                 ▼
            ╭─────────╮
            │   END   │
            ╰─────────╯
```

# FIG. 39

(A)

(B)

TUG-OF-WAR CAMERA SHIFT

POSITION SHIFTED BY MOTION

SECURE POSITION BY CHASE CAMERA

(C)

# FIG. 40

```
        ╭─────────────────────────╮
        │  CHASE  CAMERA  ACTION  │
        ╰─────────────────────────╯
                    │
                    │              S111
                    ▼
        ┌─────────────────────────┐
        │  INITIALIZE  MOTION  DATA.  │
        └─────────────────────────┘
                    │
                    │              S112
                    ▼
        ┌─────────────────────────┐
        │  SHIFT  FOCUS  CORRESPONDING │
        │  TO  SHIFT  QUANTITY.    │
        └─────────────────────────┘
                    │
                    ▼
        ╭─────────────────────────╮
        │          END            │
        ╰─────────────────────────╯
```

| INTERNATIONAL SEARCH REPORT | International application No. |
|---|---|
| | PCT/JP2005/008008 |

A. CLASSIFICATION OF SUBJECT MATTER
Int.Cl$^7$  A63F13/00, 13/02, 13/10

According to International Patent Classification (IPC) or to both national classification and IPC

B. FIELDS SEARCHED

Minimum documentation searched (classification system followed by classification symbols)
Int.Cl$^7$  A63F13/00-13/12, A63F9/24

Documentation searched other than minimum documentation to the extent that such documents are included in the fields searched
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-46793 A  (Nintendo Co., Ltd.),<br>12 February, 2004 (12.02.04),<br>Par. Nos. [0152] to [0200]; Figs. 16 to 29<br>& EP 1365360 A       & US 2002/82082 A1 | 1,9 |
| Y | JP 2001-87559 A  (Casio Computer Co., Ltd.),<br>03 April, 2001 (03.04.01),<br>Par. Nos. [0040], [0049] to [0050], [0057] to<br>[0059], [0079], [0081] to [0082], [0088] to<br>[0106]; Figs. 1, 3 to 5, 7 to 10<br>(Family: none) | 1,9 |
| Y | JP 11-216267 A  (Casio Computer Co., Ltd.),<br>10 August, 1999 (10.08.99),<br>Par. Nos. [0061] to [0081], [0100] to [0135];<br>Figs. 5 to 7, 11 to 14, 17 to 20<br>(Family: none) | 1,9 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 July 2005 (27.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 749 558 A1**

<table>
<tr><td>INTERNATIONAL SEARCH REPORT</td><td>International application No.<br>PCT/JP2005/008008</td></tr>
</table>

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
  The matter common to claims 1 and 9 relates to a game system including: code read-in means for reading in a code recorded on a card, character generation means for generating a character by a combination of codes which have been read in by the read-in means, and character evaluation means for evaluating the character generated.
  However, claims 2-4, 10, 11, claim 5, claims 6-8 do no have the configuration relating to the aforementioned game system and do not satisfy PCT Rule 13.

  (continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1, 9

**Remark on Protest**     ☐ The additional search fees were accompanied by the applicant's protest.

                   ☐ No protest accompanied the payment of additional search fees.

Form PCT/ISA/210 (continuation of first sheet (2)) (January 2004)

| INTERNATIONAL SEARCH REPORT | International application No. |
|---|---|
| | PCT/JP2005/008008 |

Continuation of Box No.III of continuation of first sheet(2)

Moreover, similarly, the matter common to the inventions of claims 2-4, 10, 11 is not contained in the inventions of claim 5, claims 6-8. Furthermore, similarly, the matter common to claim 5 is not contained in the inventions of claims 6-8. Thus, PCT Rule 13 is not satisfied.

Accordingly, it is obvious that the inventions of claims 2-4, 10, 11, claim 5, claims 6-8 do not satisfy the requirement of unity of invention.

Consequently, the present application is divided into four groups of inventions: the inventions of claims 1, 9, the inventions of claims 2-4, 10, 11, the invention of claim 5, and inventions of claims 6-8.

Form PCT/ISA/210 (extra sheet) (January 2004)

**REFERENCES CITED IN THE DESCRIPTION**

**Patent documents cited in the description**

- JP 2001334012 A
- JP 2002224443 A
- JP 2003117231 A

- JP 11766161999 A
- JP 11032200 A